(19) Europäisches Patentamt
European Patent Office
Office européen des brevets

(11) EP 3 583 196 B1

(12) # EUROPÄISCHE PATENTSCHRIFT

(45) Veröffentlichungstag und Bekanntmachung des Hinweises auf die Patenterteilung:
**04.03.2020 Patentblatt 2020/10**

(21) Anmeldenummer: **17811552.3**

(22) Anmeldetag: **06.12.2017**

(51) Int Cl.:
***C11D 3/00*** *(2006.01)* ***D06M 15/643*** *(2006.01)*

(86) Internationale Anmeldenummer:
**PCT/EP2017/081726**

(87) Internationale Veröffentlichungsnummer:
**WO 2019/110100 (13.06.2019 Gazette 2019/24)**

(54) **EMULSIONEN VON BETA-KETOCARBONYL-FUNKTIONELLEN ORGANOSILICIUMVERBINDUNGEN**

EMULSIONS OF BETA-KETOCARBONYL-FUNCTIONAL ORGANOSILICON COMPOUNDS

ÉMULSIONS DE COMPOSÉS ORGANOSILICIÉS À FONCTION BÊTA-CÉTOCARBONYLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.12.2019 Patentblatt 2019/52**

(73) Patentinhaber: **Wacker Chemie AG**
**81737 München (DE)**

(72) Erfinder:
- **RAUTSCHEK, Holger**
**01612 Nünchritz (DE)**
- **HELLER, Anton**
**84359 Simbach (DE)**
- **HOFBAUER, Irmgard**
**84533 Haiming (DE)**
- **KAUSCHKE, Marco**
**01612 Glaubitz (DE)**
- **SCHWARZKOPF, Jonas**
**01612 Nünchritz (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**DE-A1-102013 210 813**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 583 196 B1

## Beschreibung

Die Erfindung betrifft wässrige Emulsionen β-Ketocarbonyl-funktioneller Organosiliciumverbindungen.

Umsetzungsprodukte Amino-funktionalisierter Organosiliciumverbindungen mit Diketenen werden als β-Ketocarbonyl-funktionelle Organosiliciumverbindungen bezeichnet. Derartige Verbindungen sind schon lange bekannt.

US 2008/0293907 A1 beschreibt ein Verfahren zur Herstellung von β-Ketocarbonyl-funktionellen Organosiliciumverbindungen, bei dem Diketen mit Aminogruppen aufweisenden Organosiliciumverbindungen in Gegenwart einer Verbindung, die die Reaktion verzögert um eine Gelierung zu verhindern, umgesetzt werden. In den Beispielen wird ausschließlich unsubstituiertes Diketen eingesetzt, so dass Verbindungen ohne Alkylreste an der β-Ketocarbonylgruppierung als bei 25°C flüssige Öle erhalten werden. Diese sind z.B. als Haftvermittler (Fixierung auf Substraten mit Amin oder Metallionen), zur Herstellung von Polymeren und zur Vernetzung von Polyacrylaten geeignet. Formulierungen zur Applizierung dieser Verbindungen werden nicht beschrieben.

US 2009/0144912 A1 beschreibt die Behandlung von Leder mit ß-Ketocarbonyl-funktionellen Organosiliciumverbindungen. Vorzugsweise, d.h. in den Beispielen ausschließlich, erfolgt die Anwendung aus Lösungen in organischen Lösemitteln. Das ist aus Gründen des Arbeits- und Umweltschutzes sowie der Kosten nachteilig und meist unerwünscht. Als β-Ketocarbonyl-funktionelle Organosiliciumverbindungen werden vorzugsweise, d.h. in den Beispielen ausschließlich, solche ohne Alkylreste an der β-Ketocarbonylgruppierung, wie sie durch die Umsetzung von Aminosiloxanen mit unsubstituierten Diketen erhalten werden, eingesetzt. Die Möglichkeit, Emulsionen zu verwenden wird grundsätzlich erwähnt. Als mögliche Emulgatoren werden anionische Emulgatoren bevorzugt und es werden ethoxylierte Phosphorsäureester, Sarkoside oder Sulfosuccinate genannt. Wie diese Emulsionen hergestellt und appliziert werden, lehrt US 2009/0144912 A1 nicht.

In US 2011/0024679 A1 sind wachsartige β-Ketocarbonyl-funktionelle Organosiliciumverbindungen beschrieben, die durch Umsetzung von α,ω-Aminopropyl-terminierten Organosiliciumverbindungen mit Alkylketen-Dimer erhalten werden. Bei den Alkyl-Gruppen handelt es sich um längerkettige $C_{14}/C_{16}$-Alkylreste. Diese lassen sich aufgrund ihres hohen Siliconanteils im Gegensatz zu anderen Siliconwachsen in Siliconölen niederer Viskosität gut lösen (beispielsweise Dimethylpolysiloxan mit Trimethylsiloxanendgruppen und einer Viskosität von 35 $mm^2/s$ bei 25°C). Solche gelartigen Mischungen finden insbesondere in der Kosmetik Anwendung. Andere Anwendungen oder Formulierungen sind nicht beschrieben.

In US 2016/0121239 A1 wird ein Verfahren zum Entschäumen und/oder zur Verhinderung des Schäumens von wässrigen, Tenside enthaltenden Zusammensetzungen durch Zugabe von Entschäumerformulierungen beschrieben, wobei die beschriebenen Entschäumerformulierungen wachsartige β-Ketocarbonyl-funktionelle Organosiliciumverbindungen enthalten. Diese wurden durch Umsetzung von Amino-funktionalisierten Organosiliciumverbindungen mit Alkylketen-Dimer erhalten, wobei es sich bei den Alkyl-Gruppen ebenfalls um längerkettige $C_{14}/C_{16}$-Alkylreste handelt.

Diese Entschäumerformulierungen können grundsätzlich auch in Form von Emulsionen vorliegen, wobei mindestens ein nichtionogener Emulgator wie z.B. Sorbitanester, Polysorbat, ethoxylierter Alkohol oder Glycerinester vorhanden sein sollte. Konkrete Beispiele zur Formulierung derartiger Emulsionen werden in US 2016/0121239 A1 nicht gegeben.

Es bestand die Aufgabe wässrige Formulierungen von β-Ketocarbonyl-funktionellen Organosiliciumverbindungen mit längerkettigen Alkylresten, insbesondere solche, die einen Schmelzpunkt größer 30°C haben, bereitzustellen, die über eine ausreichende Lagerstabilität verfügen und die eine hohe Wirksamkeit bei der Hydrophobierung von textilen Flächengebilden, wie Geweben oder Vliesen, aufweisen.
Die Aufgabe wird durch die Erfindung gelöst.

Gegenstand der Erfindung sind wässrige Emulsionen enthaltend

(A) β-Ketocarbonyl-funktionelle Organosiliciumverbindungen, die mindestens einen Si-gebundenen Rest A der allgemeinen Formel

$$(Si)\text{-}L^1\text{-}[X^1\text{-}L^2\text{-}]_yX^2 \qquad (I)$$

enthalten, wobei

- $L^1$ gleich oder verschieden ist und einen zweiwertigen, Si-C-gebundenen Kohlenwasserstoffrest mit 1 bis 18 C-Atomen bedeutet,
- $L^2$ gleich oder unterschiedlich ist und einen zweiwertigen Kohlenwasserstoffrest mit 1 bis 6 C-Atomen bedeutet,
- $X^1$ ein Rest der Formel -O-, -NZ-, $-NR^2-$ oder -S-, vorzugsweise -NZ-, bedeutet,
- $X^2$ ein Rest der Formel -O-Z, -NH-Z, $-NR^2-Z$, -S-Z, vorzugsweise -NH-Z, bedeutet,
- Z ein Rest der Formel $-C(=O)-CHR^3-C(=O)-CH_2R^3$ ist,
- $R^2$ einen einwertigen Kohlenwasserstoffrest mit 1 bis 18 C-Atomen bedeutet,

$R^3$ einen einwertigen, gegebenenfalls substituierten Kohlenwasserstoffrest mit mindestens 12 C-Atomen, vorzugsweise mit mindestens 14 C-Atomen bedeutet,

y 0, 1, 2 oder 3, vorzugsweise 0 oder 1, besonders bevorzugt 0 ist und

(Si)- die Bindung zu einem Si-Atom bedeutet,

(B) mindestens ein Salz einer gesättigten oder ungesättigten Fettsäure mit mindestens 10 Kohlenstoffatomen und

(C) Wasser,

mit der Maßgabe, dass die Mitverwendung von nichtionogenen Emulgatoren mit einem HLB-Wert von kleiner als 15 ausgeschlossen ist.

Der Begriff wässrige Emulsion bedeutet, dass es sich um Öl in Wasser (O/W) Emulsionen handelt, also Emulsionen mit Wasser als kontinuierliche Phase und Öl als disperse Phase. Der Begriff Öl weist auf die Wasserunlöslichkeit der dispersen Phase hin und macht keine Aussage über Schmelzpunkt oder Viskosität der Substanz, die diese Phase bildet.

Der HLB-Wert (HLB steht für hydrophilic-lipophilic balance) beschreibt den hydrophilen und lipophilen Anteil von hauptsächlich nichtionischen Tensiden. Der HLB-Wert kann für nichtionische Tenside nach Hans-Dieter Dörfler, Grenzflächen- und Kolloidchemie, VCH, Weinheim, 1994, S. 198, folgendermaßen berechnet werden:

$$HLB = 20 \times \left(1 - \frac{M_1}{M}\right)$$

Dabei ist $M_1$ die Molmasse des lipophilen Anteils des Tensid-Moleküls und M die Molmasse des gesamten Moleküls. Der Faktor 20 ist ein frei ausgewählter Skalierungsfaktor.

Die erfindungsgemäßen wässrigen Emulsionen enthalten vorzugsweise mindestens 5 Gew.-%, bevorzugt mindestens 10 Gew.-%, und vorzugsweise höchstens 70,0 Gew.-%, bevorzugt höchstens 60 Gew.-%, besonders bevorzugt höchstens 55 Gew.-%, β-Ketocarbonyl-funktionelle Organosiliciumverbindungen (A), jeweils bezogen auf das Gesamtgewicht der wässrigen Emulsionen.

Die erfindungsgemäßen wässrigen Emulsionen enthalten vorzugsweise mindestens 1 Gew.-Teil, bevorzugt mindestens 3 Gew.-Teile, besonders bevorzugt mindestens 5 Gew.-Teile, und vorzugsweise höchstens 25 Gew.-Teile, bevorzugt höchstens 20 Gew.-Teile, besonders bevorzugt höchstens 15 Gew.-Teile, Salz einer gesättigten oder ungesättigten Fettsäure mit mindestens 10 Kohlenstoffatomen (B), bezogen auf 100 Gew.-Teile der β-Ketocarbonyl-funktionellen Organosiliciumverbindungen (A).

Zusätzlich zu den Salzen von gesättigten oder ungesättigten Fettsäuren mit mindestens 10 Kohlenstoffatomen können die erfindungsgemäßen Emulsionen weitere Emulgatoren (D) enthalten, wobei nichtionogene Emulgatoren mit einem HLB-Wert kleiner 15 davon ausgenommen sind. Vorzugsweise sind auch Salze von gesättigten oder ungesättigten Fettsäuren mit weniger als 10 Kohlenstoffatomen davon ausgenommen.

Im Falle, dass weitere Emulgatoren (D) enthalten sind, enthalten die erfindungsgemäßen wässrigen Emulsionen vorzugsweise mindestens 1 Gew.-Teil, bevorzugt mindestens 2 Gew.-Teile und besonders bevorzugt mindestens 4 Gew.-Teile, und vorzugsweise höchstens 25, Gew.-Teile, bevorzugt höchstens 20 Gew.-Teile, besonders bevorzugt höchstens 15 Gew.-Teile an weiteren Emulgatoren (D), jeweils bezogen auf 100 Gew.-Teile der β-Ketocarbonyl-funktionellen Organosiliciumverbindungen (A).

Vorzugsweise enthalten die erfindungsgemäßen Emulsionen keine weiteren Emulgatoren (D).

Die erfindungsgemäßen wässrigen Emulsionen enthalten vorzugsweise mindestens 1 Gew.-%, bevorzugt mindestens 5 Gew.-%, insbesondere mindestens 10 Gew.-%, und vorzugsweise höchstens 94,5 Gew.-%, bevorzugt höchstens 85 Gew.-%, insbesondere höchstens 80 Gew.-% Wasser (C), jeweils bezogen auf das Gesamtgewicht der wässrigen Emulsionen.

Die erfindungsgemäßen wässrigen Emulsionen können neben

(A), (B), (C) und (D)

gegebenenfalls weitere Inhaltsstoffe enthalten, wie

(E) nichtwässrige Lösemittel oder Co-Emulgatoren und

(F) Hilfsstoffe, vorzugsweise ausgewählt aus der Gruppe der pH-Regulierungsmittel, Schauminhibitoren, Verdicker, Schutzkolloide, Konservierungsmittel, Desinfektionsmittel, Netzmittel, Korrosionsinhibitoren, Farbstoffe, Duftstoffe, von (A) verschiedenen Siloxane, und deren Mischungen.

Die erfindungsgemäßen wässrigen Emulsionen weisen vorzugsweise Partikelgrößen D(50) (Medianwert der

Volumenverteilung) von kleiner oder gleich 2,0 μm, bevorzugt kleiner oder gleich 1,0, insbesondere kleiner 0,5 μm auf. Die Teilchengröße wird dabei mit einem Malvern Mastersizer 2000 (Malvern Instruments GmbH D-Herrenberg; Messprinzip: Fraunhofer Beugung entsprechend ISO 13320) bestimmt. Als Parameter für die Messung wird ein sphärisches Modell angenommen mit einem Brechungsindex der kontinuierlichen Phase von 1,33, einem Brechungsindex der dispersen Phase von 1,39 und einer Absorption von 0,01.

Die in den erfindungsgemäßen wässrigen Emulsionen eingesetzten β-Ketocarbonyl-funktionellen Organosiliciumverbindungen (A) können oligomere oder polymere Organosiloxane, vorzugsweise Organopolysiloxane, sein. Sie enthalten vorzugsweise mindestens 3, bevorzugt mindestens 5 und besonders bevorzugt mindestens 10 Si-Atome und vorzugsweise bis zu 2000 Si-Atome, bevorzugt bis zu 1000 Si-Atome und besonders bevorzugt bis zu 700 Si-Atome.

Vorzugsweise handelt es sich bei den eingesetzten β-Ketocarbonyl-Eunktionellen Organosiliciumverbindungen (A) um Organopolysiloxane bestehend aus Einheiten der allgemeinen Formel

$$A_aR_b(OR^1)_cSiO_{\frac{4-(a+b+c)}{2}} \qquad (II)$$

wobei

| | |
|---|---|
| A | ein Rest der Formel (I) ist, |
| R | einen einwertigen, gegebenenfalls substituierten Kohlenwasserstoffrest mit 1 bis 18 C-Atomen je Rest bedeutet, |
| $R^1$ | ein Wasserstoffatom oder einen Alkylrest mit 1 bis 8 C-Atomen bedeutet, |
| a | 0 oder 1 |
| b | 0, 1, 2 oder 3 und |
| c | 0 oder 1 ist, |

mit der Maßgabe, dass die Summe a+b+c kleiner oder gleich 3 ist und durchschnittlich mindestens ein Rest A je Molekül enthalten ist.

Bevorzugt als β-Ketocarbonyl-funktionelle Organosiliciumverbindungen (A) sind Organopolysiloxane der allgemeinen Formel

$$A_dR^4_{3-d}SiO(SiR_2O)_e(SiR^4AO)_fSiR^4_{3-d}A_d \qquad (III),$$

wobei

| | |
|---|---|
| A | ein Rest der Formel (I) ist, |
| R und $R^1$ | die oben dafür angegebene Bedeutung haben, |
| $R^4$ | gleich oder verschieden ist und einen Rest R oder $-OR^1$ bedeutet, |
| d | 0 oder 1, vorzugsweise 0, |
| e | 0 oder eine ganze Zahl von 1 bis 2000 und |
| f | 0 oder eine ganze Zahl von 1 bis 20 ist, |

mit der Maßgabe, dass durchschnittlich mindestens ein Rest A je Molekül enthalten ist und dass
f ungleich 0 ist, wenn d gleich 0 ist bzw.
d gleich 1 ist, wenn f gleich 0 ist.

Die in der erfindungsgemäßen Zusammensetzung eingesetzten β-Ketocarbonyl-funktionellen Organosiliciumverbindungen (A) können wachsartig fest oder flüssig sein. Im letzteren Fall weisen sie vorzugsweise eine Viskosität von 1 bis 1 000 000 mPa.s bei 25°C, bevorzugt 100 bis 50 000 mPas bei 25°C, auf.

Vorzugsweise sind die β-Ketocarbonyl-funktionellen Organosiliciumverbindungen (A) wachsartige Feststoffe mit einem Schmelzpunkt bzw. Schmelzbeginn größer 30°C, insbesondere größer 40°C.

Die eingesetzten β-Ketocarbonyl-funktionellen Organosiliciumverbindungen (A) sind bekannt und in US 2011/0024679 A1 bzw. US 2016/0121239 A1 (incorporated by reference) einschließlich ihrer Herstellung beschrieben.

Die eingesetzten β-Ketocarbonyl-funktionellen Organosiliciumverbindungen (A) werden vorzugsweise hergestellt, indem Organosiliciumverbindungen (1) mit mindestens einem Rest B der allgemeinen Formel

$$(Si)-L^1-[X^3-L^2-]_yX^4 \qquad (IV)$$

mit Diketenen (2) der allgemeinen Formel

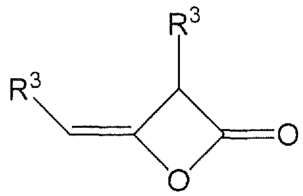

(V),

umgesetzt werden,
wobei

$X^3$ ein Rest der Formel -O-, -NH-, $-NR^2-$ oder -S-, vorzugsweise -NH- bedeutet,
$X^4$ ein Rest der Formel -OH, $-NH_2$, $-NR^2H$ oder -SH, vorzugsweise $-NH_2$ bedeutet,
$R^2$, $R^3$, $L^1$, $L^2$, y und (Si) - die oben dafür angegebene Bedeutung haben.

Vorzugsweise werden als Organosiliciumverbindungen (1) Organopolysiloxane bestehend aus Einheiten der allgemeinen Formel

$$B_gR_h(OR^1)_kSiO_{\frac{4-(g+h+k)}{2}} \quad (VI)$$

verwendet, wobei

B einen Rest der Formel (IV) bedeutet,
R einen einwertigen, gegebenenfalls substituierten Kohlenwasserstoffrest mit 1 bis 18 C-Atomen je Rest bedeutet,
$R^1$ ein Wasserstoffatom oder einen Alkylrest mit 1 bis 8 C-Atomen bedeutet,
g 0 oder 1
h 0, 1, 2 oder 3 und
k 0 oder 1 ist,

mit der Maßgabe, dass die Summe g+h+k kleiner oder gleich 3 ist und durchschnittlich mindestens ein Rest B je Molekül enthalten ist.

Bevorzugte Beispiele für Organosiliciumverbindungen (1) sind Organopolysiloxane der allgemeinen Formel

$$B_lR^4_{3-l}SiO(SiR_2O)_m(SiR^4BO)_nSiR^4_{3-l}B_l \quad (VII),$$

wobei

B einen Rest der Formel (IV) bedeutet,
R und $R^1$ die oben dafür angegebene Bedeutung haben,
$R^4$ gleich oder verschieden ist und einen Rest R oder $-OR^1$ bedeutet,
l 0 oder 1, vorzugsweise 0,
m 0 oder eine ganze Zahl von 1 bis 2000 und
n 0 oder eine ganze Zahl von 1 bis 20 ist,

mit der Maßgabe, dass durchschnittlich mindestens ein Rest B je Molekül enthalten ist und dass
n ungleich 0 ist, wenn l gleich 0 ist bzw.
l gleich 1 ist, wenn n gleich 0 ist.

Die eingesetzten Organosiliciumverbindungen (1) weisen vorzugsweise eine Viskosität von 1 bis 1 000 000 mPa.s bei 25°C, bevorzugt 100 bis 50 000 mPa.s bei 25°C, insbesondere 2000 bis 20000 mPas bei 25°C, auf.

Die eingesetzten Organosiliciumverbindungen (1) sind vorzugsweise aminofunktionelle Organosiliciumverbindungen mit einer Aminzahl von 0,01 bis 1,0 mmol/g, bevorzugt 0,03 bis 0,3 mmol/g.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste,

wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Der Rest R ist vorzugsweise ein Methyl- oder Phenylrest
Beispiele für Reste $R^1$ sind das Wasserstoffatom, oder Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Bevorzugte Beispiele für $R^1$ sind das Wasserstoffatom oder der Methyl- oder der Ethylrest.

Beispiele für Kohlenwasserstoffreste R gelten auch für Kohlenwasserstoffreste $R^2$.

Bei Rest $R^3$ handelt es sich um einen einwertigen, gegebenenfalls substituierten Kohlenwasserstoffrest mit mindestens 12 C-Atomen, vorzugsweise mit mindestens 14 C-Atomen und vorzugsweise höchstens 18 C-Atomen. Bevorzugt weist der Rest $R^3$ 14 bis 16 C-Atome auf, besonders bevorzugt ist er ein $C_{14}$-$C_{16}$-Alkylrest.
Beispiele für Reste $R^3$ sind der Dodecyl-, Tetradecyl-, Hexadecyl- und der Octadecylrest.

Beispiele für $L^1$ sind zweiwertige Kohlenwasserstoffreste, wie die Methylengruppe, die 1,2-Ethylengruppe, die 1,3-Propylengruppe, die 1,3-Butylengruppe, die 1,4-Butylengruppe, die 1,5-Pentylengruppe und die 1,6-Hexylengruppe. Besonders bevorzugte Beispiele sind die 1,3-Propylengruppe und die 1,3-Butylengruppe.

Beispiele für $L^2$ sind zweiwertige Kohlenwasserstoffreste, wie die 1,2-Ethylengruppe, die 1,3-Propylengruppe, die 1,3-Butylengruppe, die 1,4-Butylengruppe, die 1,5-Pentylengruppe und die 1,6-Hexylengruppe.
Ein besonders bevorzugtes Beispiel ist die 1,2-Ethylengruppe.

Beispiele für Reste B sind

$-CH_2CH_2CH_2OH$,

$-CH_2OCH_2CH_2OH$,

$-CH_2CH_2CH_2OCH_2CH_2OH$,

$-CH_2CH_2CH_2SH$,

$-CH_2CH_2CH_2NH_2$,

$-CH_2CH_2CH_2NHCH_3$,

$-CH_2CH(CH_3)NH_2$,

$-CH_2CH_2CH(CH_3)NH_2$

und

$-CH_2CH_2CH_2NHCH_2CH_2NH_2$.

Vorzugsweise ist der Rest B $-CH_2CH_2CH_2NH_2$ oder

$-CH_2CH_2CH_2NHCH_2CH_2NH_2$.

Besonders bevorzugt ist der Rest B $-CH_2CH_2CH_2NH_2$.

Diketen (2) wird vorzugsweise in Mengen von 0,5 bis 1,5 Mol, bevorzugt 0,7 bis 1,2 Mol, je Mol der Summe an Wasserstoffatomen enthaltenden $X^3$- und $X^4$-Gruppen im Rest B der Formel (IV) der Organosiliciumverbindung (1) eingesetzt.

Die Diketene (2) sind bei Raumtemperatur feste Stoffe, so dass deren Umsetzung mit Verbindungen (1) bevorzugt in der Wärme erfolgt, vorzugsweise bei 50 bis 100°C, so dass die Diketene (2) in geschmolzenem Zustand vorliegen. Alternativ können auch Lösungsmittel verwendet werden, jedoch ist diese Vorgehensweise nicht bevorzugt.

Vorzugsweise wird das erfindungsgemäße Verfahren bei Druck der umgebenden Atmosphäre, also etwa bei 1020 hPa, durchgeführt. Es kann aber auch bei höheren oder niedrigeren Drücken erfolgen.

Die in den erfindungsgemäßen Emulsionen eingesetzten $\beta$-Ketocarbonyl-funktionellen Organosiliciumverbindungen (A) enthalten herstellungsbedingte Verunreinigungen. Das können nicht-umgesetzte Organosiliciumverbindungen (1) nicht-umgesetzte Diketene (2) oder auch die bei der Herstellung von (1) und (2) enthaltenen Verunreinigungen

sein. Nicht einschränkende Beispiele für solche Verunreinigungen sind Carbonsäuren und deren Derivate, Reste von Lösungsmitteln, niedermolekulare lineare oder cyclische Siloxane und Polydimethylsiloxane ohne funktionelle Gruppen.

Die in den erfindungsgemäßen wässrigen Emulsionen verwendeten Fettsäuresalze (B) sind Salze von Fettsäuren mit vorzugsweise mindestens 12 Kohlenstoffatomen, bevorzugt mindestens 16 Kohlenstoffatomen und vorzugsweise mit höchstens 30 Kohlenstoffatomen, bevorzugt höchstens 20 Kohlenstoffatomen.

Beispiele für die in den erfindungsgemäßen wässrigen Emulsionen verwendeten Fettsäuresalze (B) sind Salze der Dodecansäure (Laurinsäure), der Hexadecansäure (Palmitinsäure), der Octadecansäure (Stearinsäure), der (9Z)-Octadec-9-ensäure (Ölsäure), der (9Z, 12Z)-Octadeca-9,12-diensäure (Linolsäure), und der Docosansäure (Behensäure).

Die Fettsäuren liegen in den erfindungsgemäßen Emulsionen vorzugsweise als Salze von Alkali- oder Erdalkalihydroxiden, Ammoniak oder Aminen vor.
Beispiele für Basen, die sich zur Salzbildung eignen, sind Salze wie (Erd)alkalimetallhydroxide, z.B. Natriumhydroxid, Kaliumhydroxid und Lithiumhydroxid, (Erd)alkalimetallcarbonate, z.B. Kaliumcarbonat, Natriumcarbonat und Lithiumcarbonat, Ammoniak, organische Amine, z.B. Triethanolamin (TEA), Triethylamin und Isopropylamin, 2-Butylaminoethanol und 2-Dibutylaminoethanol oder deren wässrige Lösungen.

Besonders bevorzugt ist Triethanolamin.

Vorzugsweise sind die Verhältnisse von Fettsäuren und Basen im Wesentlichen equimolar. Je nach gewünschten pH-Wert kann jedoch entweder die Fettsäure oder die Base im Überschuss vorliegen, so dass entweder freie Fettsäuren oder freie Basen entsprechend der bekannten Säure-Base-Gleichgewichte vorliegen. Eine Einstellung des pH-Wertes mit weiteren Säuren, z.B. Essigsäure, oder Basen ist ebenfalls möglich, aber nicht bevorzugt, da damit unnötige Elektrolyte in die Emulsion eingebracht werden, was für die Stabilität negativ sein kann. Auch in diesem Fall würden sich die Säure-Base-Gleichgewichte aller beteiligten Säuren und Basen einstellen.

Die erfindungsgemäßen Emulsionen weisen vorzugsweise einen pH-Wert von 6 bis 11, bevorzugt 7 bis 9 auf.

Als Wasser (C) können alle Arten von Wässern eingesetzt werden, die auch bisher zur Herstellung von Emulsionen eingesetzt wurden.

Als Wasser (C) wird vorzugsweise teil- oder vollentsalztes Wasser, destilliertes oder (mehrfach) redestilliertes Wasser, Wässer für medizinische oder pharmazeutische Zwecke, wie z. B. gereinigtes Wasser (Aqua purificata gemäß Pharm. Eur.), eingesetzt.

Das erfindungsgemäß eingesetzte Wasser (C) hat vorzugsweise eine Leitfähigkeit von weniger als 50 pS/cm, bevorzugt weniger als 10 pS/cm, besonders bevorzugt weniger als 1,3 pS/cm, jeweils bei 25°C und 1010 hPa.

Beispiele für weitere in den erfindungsgemäßen wässrigen Emulsionen verwendete Emulgatoren (D) sind:

1. Alkylpolyglycolether, Carbonsäurepolyglycolester Ethoxyliertes Rizinusöl oder hydrierte Varianten Alkylarylpolyglycolether mit einem HLB Wert > 15.
2. Polyvinylalkohol, der noch 5 bis 50%, vorzugsweise 8 bis 20% Vinylacetateinheiten aufweist, mit einem Polymerisationsgrad von 500 bis 3000.
3. Additionsprodukte von Alkylaminen mit Alkylresten von 8 bis 22 C-Atomen mit Ethylenoxid oder Propylenoxid.
4. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
5. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.
6. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 30 Ethylenoxid (EO)-bzw. Propylenoxid(PO)einheiten.
7. Sulfonate, besonders Alkylsulfonate mit 8 bis 18 C-Atomen, Alkylarylsulfonate mit 8 bis 18 C-Atomen.

Als weitere Inhaltsstoffe in den erfindungsgemäßen wässrigen Emulsionen können
(E) nichtwässrige Lösemittel oder Co-Emulgatoren eingesetzt werden.

Wenn die erfindungsgemäßen wässrigen Emulsionen nichtwässrige Lösemittel (E) enthalten dann enthalten sie (E) nichtwässrige Lösemittel oder Co-Emulgatoren in einer Menge von vorzugsweise mindestens 0,1 Gew.-%, bevorzugt mindestens 0,4 Gew.-%, insbesondere mindestens 0,8 Gew.-%, und vorzugsweise höchstens 20 Gew.-%, bevorzugt höchstens 15 Gew.-%, insbesondere höchstens 10 Gew.-%.

Die nichtwässrigen Lösungsmittel (E), die in den erfindungsgemäßen wässrigen Emulsionen eingesetzt werden können, stammen beispielsweise aus der Gruppe der ein- oder mehrwertigen Alkohole, Alkanolamine oder Glycolether. Beispiele für Lösungsmittel sind Ethanol, n- oder i-Propanol, Butanolen, wie 1-Butanol, 2-Butanol oder 2-Methyl-2-propanol, Pentanole, wie 1-Pentanol, 2-Pentanol oder 3-Pentanol, Hexanole, wie 1-Hexanol, 2-Hexanol oder 3-Hexanol, Heptanole, wie 1-Heptanol, 2-Heptanol, 3-Heptanol oder 4-Heptanol, Octanole, wie 1-Octanol, 2-Octanol, 3-Octanol oder 4-Octanol, Glycol, Propandiol, Butandiole, wie 1,2-Butandiol oder 1,3-Butandiol, Hexandiole, wie 1,2-Hexandiol oder 2-Methyl-pentan-2,4-diol, Octandiole, wie 2-Ethylhexan-1,3-diol oder 1,2-Octandiol, Glycerin, Diglykol, Propyl- oder

Butyldiglykol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Propylenglykol-n-butylether, Propylen-glykol-t-butylether, Methoxytriglykol, Ethoxytriglykol, Butoxytriglykol, Dipropylenglykolmonomethylether, Dipropylenglykolmonoethyl-ether, 1-Butoxyethoxy-2-propanol oder 3-Methyl-3-methoxy-butanol, 1-Aminobutan, 2-Aminobutan, 2-Amino-2-methyl-propan, 1-Aminopentan, 2-Aminopentan, 1-Aminohexan, 1-Aminoheptan und 1-Aminooctan; Ethyl-, Propyl-, Isopropyl-, Butyl-, Isobutyl-, Pentyl-, Isopentyl- und Hexylacetat; Methyl-, Ethyl- und
tert. Butylpropionat; Methyl-, Ethyl-, Propyl- und Butylbutyrat; 2-Butanon, 2-Pentanon, 3-Pentanon, 4-Methyl-2-pentanon, 2-Hexanon, 3-Hexanon, 2-Heptanon, 3-Heptanon, 4-Heptanon, 5-Methyl-3-Heptanon, 2-Octanon und 3-Octanon sowie Mischungen dieser Cotenside.

Beispiele für bevorzugte nichtwässrige Lösungsmittel oder Co-Emulgatoren (E) sind 1-Alkanole der vorstehend aufgeführten Beispiele mit $C_5$- bis $C_8$-Ketten, Alkandiole der vorstehend aufgeführten Beispiele mit $C_4$- bis Cs-Ketten, Glycerin, Propyl-, Butyl- und Pentylacetat, 2-Pentanon sowie die oben aufgeführten Ethylenglykol-, Propylenglykol-, Dipropylenglykol- oder Diethylenglykolmonoalkylether.
Als nichtwässrige Lösungsmittel oder Co-Emulgatoren (E) besonders bevorzugt sind 1-Pentanol, 1-Hexanol, 1-Octanol, Propandiol, 1,3-Butandiol, 1,2-Hexandiol, 2-Ethylhexan-1,3-diol, 1,2-Octandiol, Glycerin, Diethylenglykolmethylether, Diethylenglykolethylether, Diethylenglykolmono-n-butylether oder Propylenglykolmethylether.

Ferner können Polyalkylenglykole, wie Polyethylenglykole (z.B. PEG600, PEG1000 oder PEG6000) oder Polypropylenglykole (z.B. PPG2000) oder auch Polyoxamine (Copolymere aus Ethylenoxid- und Propylenoxid-Einheiten, die über einen Ethylendiamin-Kern verbrückt sind), wie z.B. Tetronic 701 oder Tetronic 90R4 (erhältlich bei Sigma-Aldrich), mit der Maßgabe, dass sie einen HLB-Wert von größer 15 aufweisen, als Co-Emulgatoren verwendet werden.

Vorzugsweise werden keine nichtwässrigen Lösemittel oder Co-Emulgatoren (E) eingesetzt.

Als weitere Inhaltsstoffe in den erfindungsgemäßen wässrigen Emulsionen können
(F) Hilfsstoffe, vorzugsweise ausgewählt aus der Gruppe der pH-Regulierungsmittel, von (A) verschiedene Siloxane, Schauminhibitoren, Verdicker, Schutzkolloide, Konservierungsmittel, Desinfektionsmittel, Netzmittel, Korrosionsinhibitoren, Farbstoffe, Duftstoffe und deren Mischungen,
eingesetzt werden.

Beispiele für Schauminhibitoren sind Seifen, Paraffine oder Silikonöle.

Beispiele für Konservierungsmittel sind Methylisothiazolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropynylbutylcarbamat, Benzylalkohol und 2-Brom-2-nitropropan-1,3-diol.

Vorzugsweise enthalten die erfindungsgemäßen Emulsionen weniger als 5 Gew.-%, bevorzugt weniger als 1 Gew.-%, hochdisperse gefällte oder pyrogene Kieselsäuren, von (A) verschiedene Siloxane oder Siliconharze. Insbesondere sind die erfindungsgemäßen Emulsionen frei von hochdispersen gefällten oder pyrogenen Kieselsäuren und von (A) verschiedenen Siloxanen oder Siliconharzen.

Ein weiterer Gegenstand der Erfindung ist ein Verfahren zur Herstellung der erfindungsgemäßen wässrigen Emulsionen durch Vermischen von β-Ketocarbonyl-funktionellen Organosiliciumverbindung (A), mindestens einem Salz einer Fettsäure mit mindestens 10 Kohlenstoffatomen (B), Wasser (C), gegebenenfalls weiteren Emulgatoren (D), gegebenenfalls Co-Emulgatoren (E) sowie gegebenenfalls Hilfsstoffen (F),
mit der Maßgabe, dass die Mitverwendung von nichtionogenen Emulgatoren mit einem HLB-Wert von kleiner als 15 ausgeschlossen ist.

Die Herstellung der erfindungsgemäßen wässrigen Emulsionen erfolgt vorzugsweise durch intensives Mischen der β-Ketocarbonyl-funktionellen Organosiliciumverbindung (A), mit mindestens einem Salz einer Fettsäure mit mindestens 10 Kohlenstoffatomen (B), Wasser (C), gegebenenfalls weiteren Emulgatoren (D), gegebenenfalls Co-Emulgatoren (E) sowie gegebenenfalls Hilfsstoffen (F).

Es werden stabile Emulsionen gebildet. Dadurch liegen die β-Ketocarbonyl-funktionellen Organosiliciumverbindungen (A) in fein verteilter Form vor.

Die Art der Mischung der Komponenten, die zur Herstellung der erfindungsgemäßen Emulsionen gebraucht werden, ist nicht sehr kritisch und kann in verschiedener Reihenfolge ausgeübt werden.

In Abhängigkeit von den Komponenten (A), (B), (C), gegebenenfalls (D), gegebenenfalls (E) und gegebenenfalls (F) können sich aber bevorzugte Vorgehensweisen ergeben, die im Einzelfall geprüft werden sollten.

Ein favorisiertes Verfahren ist die Herstellung der wässrigen Polysiloxan-Emulsionen über eine standfeste Voremulsion mit mindestens einem Salz einer Fettsäure mit mindestens 10 Kohlenstoffatomen (B), Wasser (C), gegebenenfalls weiteren Emulgatoren (D), gegebenenfalls Co-Emulgatoren (E) sowie gegebenenfalls Hilfsstoffen (F), wobei weniger als 10 Gew.-% Wasser, bevorzugt weniger als 7,5 Gew.-% Wasser (C), jeweils bezogen auf die Summe aus β-Ketocarbonyl-funktionellen Organosiliciumverbindungen (A) und den Emulgatoren (B) und gegebenenfalls (D), verwendet wird.

Diese Voremulsion wird vorzugsweise erzeugt, indem zu der β-Ketocarbonyl-funktionellen Organosiliciumverbindung (A) mindestens ein Salz einer Fettsäure mit mindestens 10 Kohlenstoffatomen (B), gegebenenfalls weitere Emulgatoren (D), gegebenenfalls Co-Emulgatoren (E) und die oben angegebene Portion Wasser (C) zugegeben und eingearbeitet wird.

Die erfindungsgemäßen wässrigen Emulsionen werden schließlich erhalten, indem zur hergestellten Voremulsion die restliche Menge Wasser (C) sowie gegebenenfalls Hilfsstoffe (F) hinzugefügt werden.

Es ist dabei bevorzugt, dass die Salze einer Fettsäure mit mindestens 10 Kohlenstoffatomen erst bei der Herstellung der Voremulsion aus den entsprechenden Fettsäuren und Basen gebildet werden.

Im Falle dass es sich bei den eingesetzten β-Ketocarbonyl-funktionellen Organosiliciumverbindungen (A) und/oder den zur Bildung der Salze einer Fettsäure mit mindestens 10 Kohlenstoffatomen (B) eingesetzten Fettsäure und/oder gegebenenfalls weiteren Emulgatoren (D) um Stoffe handelt, die bei 20°C wachsartig oder fest sind, so erfolgt die Herstellung der Voremulsion bei höheren Temperaturen. Der Emulgiervorgang zur Herstellung der Voremulsion wird so vorzugsweise bei Temperaturen von mindestens 20°C, bevorzugt mindestens 30°C, besonders bevorzugt mindestens 40°C, und vorzugsweise höchstens 90°C, bevorzugt höchstens 80°C, besonders bevorzugt höchstens 70°C, durchgeführt.

Die eingesetzten Rohstoffe müssen vor dem Einarbeiten auf die entsprechende Temperatur oberhalb der Schmelztemperatur erwärmt werden, damit eine Dosierung möglich ist.

Die Herstellung der Voremulsion erfolgt unter Einwirkung hoher Scherkräfte.

Hohe Scherkräfte können beispielsweise durch Rotor-Stator-Rührvorrichtungen oder durch Dissolverscheiben erreicht werden. Es handelt sich dabei um Technologien, die zur Herstellung von Dispersionen oder Emulsionen von Organopolysiloxanen bekannt sind. Derartige Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Rotor-Stator-Rührvorrichtungen bestehen aus einem Rotor in einem feststehenden Stator. Durch die Schlitze zwischen den Rotorzähnen gelangt das zu emulgierende Produkt in die Scherzone und verlässt diese wieder über die Statorschlitze. Durch den engen Radialspalt zwischen Rotor und Stator und die hohe Umfangsgeschwindigkeit des sich drehenden Rotors werden sehr große Schergradienten erzeugt (siehe z.B. IKA Dispergierer Broschüre, 2013-05).

Bei Dissolverscheiben-Rührgeräten ist an einer senkrechten Rührwelle eine mit Zähnen besetzte Rührscheibe angebracht, die in das zu dispergierende Produkt getaucht wird. Setzt sich die Scheibe in Drehbewegung entstehenden dabei Scherkräfte, die ebenfalls abhängig von der Umfangsgeschwindigkeit sind (siehe z.B Römpp Chemie Lexikon online, 2014, Kap. Dissolver).

Die Umfangsgeschwindigkeit der Rotor-Stator-Homogenisatoren bzw. der Dissolverscheiben beträgt bei der Herstellung der Voremulsion vorzugsweise 5 m/s, besonders bevorzugt mindestens 10 m/s.

Die Voremulsion ist vorzugsweise eine hochviskose und nicht fließfähige Paste. Besonders bevorzugt ist es, wenn die Fließgrenze (entsprechend DIN 53019-1 und dort zitierten Normen) dieser pastösen Vormischung größer als 100 Pa (25°C), insbesondere größer als 1000 Pa (25°C), ist.

Bei der Verdünnung der Voremulsion zum Endprodukt, können die Scherkräfte reduziert werden, was bevorzugt ist.

Weiterhin wird das erfindungsgemäße Verfahren vorzugsweise beim Druck der umgebenden Atmosphäre durchgeführt, kann aber auch bei höheren oder tieferen Drücken durchgeführt werden.

Die Herstellung der erfindungsgemäßen Emulsionen der β-Ketocarbonyl-funktionellen Organosiliciumverbindungen (A) kann diskontinuierlich oder kontinuierlich erfolgen.

Ein Vorteil der erfindungsgemäßen wässrigen Emulsionen gegenüber dem Stand der Technik ist ihre hohe Lagerstabilität. Lagerstabile Emulsionen sind solche Emulsionen, bei denen nach 30 Tagen Lagerung bei 50°C, vorzugsweise im Trockenschrank, keine sichtbare Trennung in zwei Phasen auftritt.

Ein weiterer Vorteil der erfindungsgemäßen wässrigen Emulsionen ist, dass sie mit aminofunktionellen Organosiliciumverbindungen (G) oder deren wässrigen Emulsionen (G') mischbar sind, ohne dass die entstandenen Mischungen eine Instabilität aufweisen.

Gegenstand der Erfindung ist weiterhin ein Verfahren zur Ausrüstung faseriger Substrate mit Zusammensetzungen enthaltend erfindungsgemäße wässrige Emulsionen enthaltend β-Ketocarbonyl-funktionelle Organosiliciumverbindungen (A), Fettsäuresalze (B),
Wasser (C),
gegebenenfalls weiteren Emulgatoren (D),
gegebenenfalls Co-Emulgatoren (E) sowie
gegebenenfalls Hilfsstoffe(F).

Insbesondere handelt es sich bei den erfindungsgemäßen wässrigen Emulsionen um Produkte, die sicher in der Handhabung sind und die in der Lage sind, Fasern waschecht wasserabweisend und weich auszurüsten.

Beispiele für faserige Substrate sind natürliche oder synthetisch hergestellte Fasern, Garne, Stränge, Seile, textile Flächengebilde wie Vliese, Matten, gewebte, geknüpfte, gewirkte oder gestrickte Textilien, sowie Leder und Kunstleder; bevorzugte faserige Substrate sind Textilien.

Für den Auftrag der erfindungsgemäßen Zusammensetzung können die Textilien in Form von Einzelfasern, Faserbündeln, Füllfasern, Garnen, Teppichen, Stoffbahnen oder Kleidungsstücken oder Teilen von Kleidungsstücken vorliegen.

Die Textilien können aus Baumwolle, Wolle, Mischpolymere von Vinylacetat, Rayon, Hanf, natürlicher Seide, Polypropylen, Polyethylen, Polyester, Polyurethan, Polyamid, Aramid, Polyimid, Polyacrylat, Polyacrylnitril, Polylactid, Polyvinylchlorid, Glasfasern, Keramikfasern, Cellulose oder deren Gemische bestehen.

Das Auftragen auf die zu behandelnden Textilien kann in beliebiger für die Behandlung von Textilien geeigneter und vielfach bekannter Weise, z.B. durch Tauchen, Streichen, Gießen, Sprühen, Aufwalzen, Klotzen, Drucken oder Schaumauftrag erfolgen.

In der Anwendung kann die erfindungsgemäße Zusammensetzung mit gebrauchsüblichen Textilhilfsmitteln, wie zum Beispiel Bindemittel aus Melamin- oder Methylolharzen, Polyurethanen, Polyacrylaten, Polyvinylalkoholen, Polyvinylacetaten, optischen Aufhellern, Benetzungshilfsmitteln, Entschäumern oder weiteren Hydrophobier- und Oleophobierhilfsmitteln wie perfluorierte Kohlenwasserstoffe kombiniert werden.

Die behandelten Textilien werden vorzugsweise bei Temperaturen von 10°C bis 250°C, bevorzugt 25°C bis 200°C, besonders bevorzugt 80°C bis 180°C, trocknen gelassen.

Hierbei erfolgen gegebenenfalls eine Vernetzung der erfindungsgemäßen Zusammensetzung und eine Imprägnierung der behandelten Textilien, wobei sie wasserabweisend gemacht werden.

Die Verwendung der erfindungsgemäßen wässrigen Emulsion hat den Vorteil, dass sie eine sehr gute wasserabweisende Ausrüstung unterschiedlicher Textilien ermöglicht, sie einfach und sicher verarbeitbar ist, sie ohne dauerhaft umweltbelastende Stoffe hergestellt werden kann, und die wasserabweisende Ausrüstung eine sehr gute Waschpermanenz aufweist.

Ferner können die erfindungsgemäßen wässrigen Emulsionen in Kombination mit aminofunktionellen Organosiliciumverbindungen (G) oder deren wässrigen Emulsionen (G') zur Ausrüstung von faserigen Substraten verwendet werden, um diese waschecht wasserabweisend und weich auszurüsten.

Als aminofunktionelle Organosiliciumverbindungen (G) werden vorzugsweise Organosiliciumverbindungen mit mindestens einem Rest Q der allgemeinen Formel

$$(Si)\text{-}L^1\text{-}[X^5\text{-}L^2\text{-}]_zX^6 \qquad (VIII)$$

eingesetzt, wobei

| | |
|---|---|
| $X^5$ | ein Rest der Formel -NH- oder $-NR^2-$, vorzugsweise -NH- bedeutet, |
| $X^6$ | ein Rest der Formel $-NH_2$ oder $-NR^2H$, vorzugsweise $-NH_2$ bedeutet, |
| z | 0, 1, 2 oder vorzugsweise 0 oder 1, bevorzugt 1 ist und |
| $R^2$, $L^1$, $L^2$ und (Si)- | die oben dafür angegebene Bedeutung haben. |

Es kann eine Art von aminofunktionellen Organosiliciumverbindungen (G) oder mehrere Arten von aminofunktionellen Organosiliciumverbindungen (G) eingesetzt werden.

Aminofunktionelle Organosiliciumverbindungen (G) oder deren wässrige Emulsionen (G') sind dem Fachmann bekannte handelsübliche Produkte die insbesondere zur Verbesserung des Weichgriffs von Textilien eingesetzt werden.

Bevorzugt werden als aminofunktionelle Organosiliciumverbindungen (G) Organopolysiloxane der allgemeinen Formel

$$Q_uR^4_{(3-u)}SiO(SiR_2O)_v(SiR^4QO)_wSiR^4_{(3-u)}Q_u \qquad (X)$$

eingesetzt, wobei

| | |
|---|---|
| R und $R^4$ | die oben dafür angegebene Bedeutung haben, |
| Q | einen Rest der Formel (VIII) bedeutet, |
| u | 0 oder 1, |
| v | 0 oder eine ganze Zahl von 1 bis 2000 und |
| w | 0 oder eine ganze Zahl von 1 bis 20 ist, |

mit der Maßgabe, dass durchschnittlich mindestens ein Rest Q je Molekül enthalten ist, was bedeutet, dass w ungleich 0 ist, wenn u gleich 0 ist bzw.
u gleich 1 ist, wenn w gleich 0 ist.

Aminofunktionelle Organosiliciumverbindungen (G) werden bevorzugt nach den in US 2005/0215806 A1, US 2002/0049296 A1 oder US 2015/0112092 A1 beschriebenen Verfahren hergestellt.

Beispiele für Reste Q sind

$-CH_2CH_2CH_2NH_2$,

$-CH_2CH_2CH_2NHCH_3$,

$-CH_2CH(CH_3)NH_2$

$-CH_2CH_2CH(CH_3)NH_2$,

$-CH_2CH_2CH_2NHCH_2CH_2NH_2$

und

$-CH_2CH(CH_3)CH_2NHCH_2CH_2NH_2$.

Ferner können die erfindungsgemäßen wässrigen Emulsionen in Kombination mit aminofunktionellen Organosiliciumverbindungen (G) oder deren wässrigen Emulsionen (G') und in Kombination mit Organometallverbindungen (H) zur Behandlung von faserigen Substraten, insbesondere Textilien, verwendet werden, vorzugsweise um diese waschecht wasserabweisend und weich auszurüsten.

Als Organometallverbindungen (H) können Amine, Alkoholate, carbonsaure Salze, phosphorsaure Salze oder Chelate von Metallen ausgewählt aus der Gruppe von Pb, Zn, Zr, Sb, Fe, Cd, Sn, Ti, Ba, Ca, Mn, V, Al und Co eingesetzt werden.

Bevorzugt werden Organometallverbindungen des Zn, Zr, Ti, und des Al eingesetzt. Besonders bevorzugt sind Organometallverbindungen des Zr und Ti.

Beispiele für carbonsaure Salze sind Naphtenate, Octoate, Hexoate, Laurate, Acetate, Formiate, Citrate und Lactate.

Bevorzugt werden Alkoholate und carbonsaure Salze des Titan und Zirkon eingesetzt.

Besonders bevorzugt sind Butyltitanat, Zirkonoctoat und Zirkonacetat.

In den nachfolgenden Beispielen beziehen sich alle Angaben von Teilen und Prozentsätzen, soweit nicht anders angegeben, auf das Gewicht.

Sofern nicht anders angegeben, werden die folgenden Beispiele bei einem Druck der umgebenden Atmosphäre, also bei etwa 101 kPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Dynamische Viskositäten wurden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe (angegeben in mPas) stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

Die Prüfung des pH-Wertes der Emulsionen erfolgte mit Indikatorstäbchen MColorpHast® pH 5,0-10,0 von Merck KGaA Darmstadt.

Die Aminzahl gibt an, wieviel mmol KOH einem Gramm der zu bestimmenden Substanz äquivalent sind. Die Bestimmung der Aminzahl erfolgt nach DIN 16945-Version 1989-03.

$^1H$-NMR-Spektren werden als Lösung in $CDCl_3$ an einem Bruker Avance 500-NMR-Spektrometer (5 mm selektiver $^1H$-NMR-Probenkopf) mit einer Messfrequenz 500,13 MHz aufgenommen. Die Auswertung erfolgt wie dem Fachmann bekannt und in folgender Literatur beschrieben: "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300; "Chapter 8 - NMR spectroscopy of organosilicon compounds", Elizabeth A. Williams, The Chemistry of Organic Silicon Compounds, 1989 John Wiley and Sons Ltd, 511-533.

Die Schmelzbereiche wurden nach USP 40 Class II Apparatus 1 mit Wasser als Badflüssigkeit bestimmt. Im Folgenden wird die Temperatur beim Schmelzbeginn angegeben.

Die Teilchengröße wurde mit einem Malvern Mastersizer 2000 (Malvern Instruments GmbH D-Herrenberg; Messprinzip: Fraunhofer Beugung entsprechend ISO 13320) bestimmt. Als Parameter für die Messung wurde ein sphärisches Modell angenommen mit einem Brechungsindex der kontinuierlichen Phase von 1,33, einem Brechungsindex der dispersen Phase von 1,39 und einer Absorption von 0,01.

Die Emulsionen wurden für 8h bei 4000/min (entspricht ca. 2300 x g) zentrifugiert, wobei eine LUMiFuge® 110.2-69 (LUM GmbH Berlin) und Küvetten mit Schichtdicken von 2 mm verwendet wurden. Die Stabilität wird durch

den durch die Software des Gerätes ausgegebenen Instabilitätsindex charakterisiert. Ist dieser 0, ist die Emulsion stabil, ist er 1, ist die Emulsion völlig separiert (Vgl. Dispersion Letters Technical, T4 (2013) 1-4, Update 2014).

Die Stabilität nach 28d Lagerung bei 50°C wurde visuell beurteilt.

Die Emulsionen ggf. gemeinsam mit einer Emulsion aminofunktioneller Siloxane erhältlich unter der Bezeichnung WACKER® FINISH CT 45 E und mit Zirkoniumacetat als metallorganische Verbindung werden in den Mengenanteilen, wie in den in der Tabelle aufgeführten Ausführungsbeispielen, folgendermaßen auf textile Flächengebilde aufgebracht:
Verwendet wird ein DIN A4 großes Stück einer gebleichten, unausgerüsteten Polyester-Baumwoll-Popeline (65% PET, 35% CO) mit einem Flächengewicht von 185 g/$m^2$.
Der Stoff wird jeweils in eine wässrige Flotte mit einer jeweiligen Flottenkonzentration wie in Tabelle 2 beschrieben getaucht und anschließend mit einem Zweiwalzenfoulard auf 50% Flottenaufnahme abgequetscht, aufgespannt und in einem Mathis-Laborspannrahmen bei 150°C 5 Minuten getrocknet. Danach wird die Ware mindestens 72 Stunden im Klimaraum bei 23°C und 60% Luftfeuchtigkeit klimatisiert, damit sie zur Bestimmung der Hydrophobierung ausreichend konditioniert ist.

Die Hydrophobie der behandelten Textilien wird mittels Spraytest gemäß AATCC Testmethode Nr. 22-2005 geprüft. Dabei werden die Textilien mit entionisiertem Wasser besprenkelt. Das Ergebnis, das aus dem Vergleich der besprenkelten Textil-Oberfläche mit den Rating-Bildern in der Methodenbeschreibung resultiert, gibt in etwa an, wieviel % der Fläche unbenetzt geblieben ist. Ein Spraywert von 100 bedeutet ein völlig unbenetztes Textil.

Außerdem wurden die wasserabweisenden Eigenschaften mittels Beregnungsprüfung nach DIN EN 29865:1993 (dem Fachmann geläufig als "Bundesmanntest") geprüft. Dabei wird nach 10 min Beregnung eine visuelle Bewertung vorgenommen und die Wasseraufnahme der Probe in % bestimmt. Die visuelle Bewertung kennt folgende Stufen: 5: kleine Tropfen perlen lebhaft ab; 4: Bildung größerer Tropfen; 3: Tropfen bleiben stellenweise auf der Probe hängen; 2: Probe teilweise benetzt; 1: Probe auf der ganzen Fläche benetzt.

Für die Untersuchung der Waschechtheiten werden alle ausgerüsteten Textilien einmal zusammen mit ca. 2 kg Ballaststoff in einer Haushaltswaschmaschine der Marke MIELE Softtronic W 1935 mit dem Waschprogramm Express 20 für 20 Minuten bei 40°C gewaschen und geschleudert. Als Waschtensid werden dabei 5 g eines Flüssigwaschmittels der Marke "Spee Feinwaschmittel" von der Firma Henkel dosiert.
Anschließend wird die Ware mindestens 12 Stunden im Klimaraum bei 23°C und 60 % Luftfeuchtigkeit getrocknet und klimatisiert. Zur Entfernung des Waschknitters werden die Prüflinge mit einem Bügeleisen der Marke Philipps Azur 4043 auf Stufe II gebügelt. Die Warenmuster werden dann erneut auf Hydrophobie nach der Spray-Test Methode geprüft.

Beispiel **A1**: β-Ketocarbonyl-funktionelle Organosiliciumverbindung **A1**:

750 g eines mit Trimethylsilylendgruppen terminierten Polysiloxans bestehend aus (3-Aminopropyl)methylsiloxy- und Dimethylsiloxyeinheiten mit einer dynamischen Viskosität von 18800 mPas und einer Aminzahl von 0,094 mmol/g werden gemeinsam mit 38,67 g Alkylketen-Dimer (erhältlich unter dem Namen Wilfawax® AKD 67 bei der Fa. Wilmar Oleo B.V.) unter Rühren erhitzt. Das Alkylketen-Dimer wurde aus einem Gemisch aus Palmitin-/Stearinsäure (ca. 35/65) hergestellt, woraus ein Rest -$R^3$ von C14/C16-Alkyl resultiert. Das Alkylketen-Dimer hatte eine Iodzahl von 45,5g $I_2$/100g. Bei 60°C ist die Mischung vollständig aufgeschmolzen. Nach Erreichen von 80°C wird 15 min bei 80°C gerührt. Nach Abkühlen auf Raumtemperatur erhält man als gelbliches festes Wachs (Schmelzbeginn 49°C) ein β-Ketocarbonyl-funktionelles Organopolysiloxan **A1**, in dem 98,6 % der ursprünglichen Diketen-Gruppen umgesetzt wurden (gemessen mittels $^1$H-NMR-Spektroskopie).

Beispiel **A2:** β-Ketocarbonyl-funktionelle Organosiliciumverbindung **A2:**

1000 g eines mit Trimethylsilylendgruppen terminierten Polysiloxans bestehend aus (3-Aminopropyl)methylsiloxy- und Dimethylsiloxyeinheiten mit einer dynamischen Viskosität von 1870 mPas und einer Aminzahl von 0,128 mmol/g werden gemeinsam mit 70,24 g Alkylketen-Dimer (erhältlich unter dem Namen Wilfawax® AKD 67 bei der Fa. Wilmar Oleo B.V.) unter Rühren erhitzt.
Bei 60°C ist die Mischung vollständig aufgeschmolzen. Nach Erreichen von 80°C wird 15 min bei 80°C gerührt. Nach Abkühlen auf Raumtemperatur erhält man als gelbliches festes Wachs (Schmelzbeginn 41°C) ein β-Ketocarbonyl-funktionelles Organopolysiloxan **A2,** in dem 97,0 % der ursprünglichen Diketen-Gruppen umgesetzt wurden (gemessen mittels $^1$H-NMR-Spektroskopie).

Beispiel **A3:** β-Ketocarbonyl-funktionelle Organosiliciumverbindung **A3:**

750 g eines mit Trimethylsilylendgruppen terminierten Polysiloxans bestehend aus (3-Aminopropyl)methylsiloxy- und Dimethylsiloxyeinheiten mit einer dynamischen Viskosität von 12100 mPas und einer Aminzahl von 0,05 mmol/g

werden gemeinsam mit 20,97 g Alkylketen-Dimer (erhältlich unter dem Namen WILFAWAX® AKD 67 bei der Fa. Wilmar Oleo B.V.) unter Rühren erhitzt.
Bei 60°C ist die Mischung vollständig aufgeschmolzen. Nach Erreichen von 80°C wird 15 min bei 80°C gerührt. Nach Abkühlen auf Raumtemperatur erhält man als gelbliches festes Wachs (Schmelzbeginn 42°C) ein β-Ketocarbonyl-funktionelles Organopolysiloxan **A3,** in dem 98,6 % der ursprünglichen Diketen-Gruppen umgesetzt wurden (gemessen mittels $^{1}$H-NMR-Spektroskopie).

Beispiel **A4:** β-Ketocarbonyl-funktionelle Organosiliciumverbindung **A4:**

1000 g eines mit Trimethylsilylendgruppen terminierten Polysiloxans bestehend aus (3-Aminopropyl)methylsiloxy- und Dimethylsiloxyeinheiten mit einer dynamischen Viskosität von 8120 mPas und einer Aminzahl von 0,048 mmol/g werden gemeinsam mit 26,32 g Alkylketen-Dimer (erhältlich unter dem Namen WILFAWAX® AKD 67 bei der Fa. Wilmar Oleo B.V.) unter Rühren erhitzt.
Bei 60°C ist die Mischung vollständig aufgeschmolzen. Nach Erreichen von 80°C wird 15 min bei 80°C gerührt. Nach Abkühlen auf Raumtemperatur erhält man als gelbliches festes Wachs (Schmelzbeginn 38°C) ein β-Ketocarbonyl-funktionelles Organopolysiloxan **A4,** in dem 97,8 % der ursprünglichen Diketen-Gruppen umgesetzt wurden (gemessen mittels $^{1}$H-NMR-Spektroskopie).

Beispiel **A5:** β-Ketocarbonyl-funktionelle Organosiliciumverbindung **A5:**

300 g eines mit Trimethylsilylendgruppen terminierten Polysiloxans bestehend aus (3-Aminopropyl)methylsiloxy- und Dimethylsiloxyeinheiten mit einer dynamischen Viskosität von 1520 mPas und einer Aminzahl von 0,266 mmol/g werden gemeinsam mit 43,78 g Alkylketen-Dimer (erhältlich unter dem Namen WILFAWAX® AKD 67 bei der Fa. Wilmar Oleo B.V.) unter Rühren erhitzt.
Bei 60°C ist die Mischung vollständig aufgeschmolzen. Nach Erreichen von 80°C wird 15 min bei 80°C gerührt. Nach Abkühlen auf Raumtemperatur erhält man als gelbliches festes Wachs (Schmelzbeginn 43°C) ein β-Ketocarbonyl-funktionelles Organopolysiloxan A5, in dem 99,1 % der ursprünglichen Diketen-Gruppen umgesetzt wurden (gemessen mittels $^{1}$H-NMR-Spektroskopie).

Beispiel **V1**: (nicht erfindungsgemäß)

200g β-Ketocarbonyl-funktioneller Organosiliciumverbindung **A1** werden bei 60°C aufgeschmolzen. 8,88g einer 90%igen wässrigen Lösung an Isotridecyldecaethoxylat, käuflich erwerblich unter dem Handelsnamen MARLIPAL® O13/109 (Fa. SASOL), und 7,12 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine feste steife Phase als Voremulsion. Diese wird langsam mit 184,24 g vollentsalztem Wasser unter geringer Scherung zur gewünschten Emulsion verdünnt. Als Konservierer werden 0,36g ACTICIDE® MV (Thor Chemie GmbH Speyer) zugegeben. Es resultiert eine milchig-weiße Dispersion mit einer durchschnittlichen Partikelgröße D(50) von 0,441 µm und einem pH-Wert von 6,5.

Beispiel V2: (nicht erfindungsgemäß)

200g β-Ketocarbonyl-funktioneller Organosiliciumverbindung **A1** werden bei 60°C aufgeschmolzen. 4,44g einer 90%igen wässrigen Lösung an Isotridecyldecaethoxylat, käuflich erwerblich unter dem Handelsnamen MARLIPAL® O13/109 (Fa. SASOL), 4,00 g Isotridecylpentaethoxylat, käuflich erwerblich unter dem Handelsnamen Lutensol TO 5 und 7,56 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine feste steife Phase als Voremulsion. Diese wird langsam mit 184,24 g vollentsalztem Wasser unter geringer Scherung zur gewünschten Emulsion verdünnt. Als Konservierer werden 0,36g ACTICIDE® MV (Thor Chemie GmbH Speyer) zugegeben. Es resultiert eine milchig-weiße Dispersion mit einer durchschnittlichen Partikelgröße D(50) von 0,481 µm und einem pH-Wert von 6,5.

Beispiel **V3:** (nicht erfindungsgemäß)

200g β-Ketocarbonyl-funktioneller Organosiliciumverbindung **A1** werden bei 60°C aufgeschmolzen. 12,0 g Laurinsäure, (Acros Organics, Geel BE), 7,84 g einer wässrigen Lösung an Kaliumhydroxid (50%ig) sowie 4,0 g Polyoxyethylen(4)lauryl-ether, käuflich erwerblich unter dem Handelsnamen Sympatens-ALM/040 (Fa. Kolb) und 4,08 g vollentsalztes Wasser werden zugegeben und die Mischung mit einem ULTRA-TURRAX® T50 (Fa. Janke & Kunkel/IKA)

4 Minuten bei einer Drehzahl von 6000/min (was einer Umfangsgeschwindigkeit von ca. 12 m/s entspricht) homogenisiert. Es entsteht eine feste steife Phase als Voremulsion. Diese wird langsam mit 171,32 g vollentsalztem Wasser unter geringer Scherung zur gewünschten Emulsion verdünnt. Als Konservierer werden 0,36g ACTICIDE® MV (Thor Chemie GmbH Speyer) zugegeben. Es resultiert eine milchig-weiße Dispersion mit einer durchschnittlichen Partikelgröße D(50) von 0,766 μm und einem pH-Wert 10,0. Bei niedrigeren pH-Werten zerfällt die Emulsion sofort.

Beispiel **V4:** (nicht erfindungsgemäß)

200g β-Ketocarbonyl-funktioneller Organosiliciumverbindung **A1** werden bei 60°C aufgeschmolzen. 4,0 g Laureth 4, käuflich erwerblich unter dem Handelsnamen SP BRIJ® L4 MBAL-LQ-(SG) (Croda GmbH Nettetal), 6,0 g Laureth 23, käuflich erwerblich unter dem Handelsnamen SP BRIJ® L23 MBAL-LQ-(RB) (Croda GmbH Nettetal) und 8,0 g Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine cremige Mischung als Voremulsion. Diese wird langsam mit 181,24 g vollentsalztem Wasser unter geringer Scherung zur gewünschten Emulsion verdünnt. Als Konservierer werden 0,36g ACTICIDE® MV (Thor Chemie GmbH Speyer) zugegeben. Die inhomogene Mischung ist nicht mit Wasser verdünnbar also unbrauchbar.

Beispiel **V5:** (nicht erfindungsgemäß)

200g β-Ketocarbonyl-funktioneller Organosiliciumverbindung **A1** werden bei 60°C aufgeschmolzen. 15,0 g einer 40%igen wässrigen Lösung eines ethoxylierten Rizinunsöls mit 200 Ethylenglycol-einheiten, käuflich erwerblich unter dem Handelsnamen HEDIPIN® R/2000 G (Kolb Distribution Ltd. Hedingen, CH), 6,0 g Isotridecylpentaethoxylat, käuflich erwerblich unter dem Handelsnamen Lutensol TO 5 werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine cremige Mischung als Voremulsion. Diese wird langsam mit 178,24 g vollentsalztem Wasser unter geringer Scherung zur gewünschten Emulsion verdünnt. Als Konservierer werden 0,36g ACTICIDE® MV (Thor Chemie GmbH Speyer) zugegeben.

Die Mischung wird beim Verdünnen zunehmend viskoser und ist nicht mit Wasser verdünnbar also unbrauchbar.

Beispiel **V6:** (nicht erfindungsgemäß)

200g β-Ketocarbonyl-funktioneller Organosiliciumverbindung **A1** werden bei 60°C aufgeschmolzen. 12,0 g Isotridecylhexadecaethoxylat, käuflich erwerblich unter dem Handelsnamen IMBENTIN® T/77 (Kolb Distribution Ltd. Hedingen, CH) und 8,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine feste steife Phase als Voremulsion. Diese wird langsam mit 179,24 g vollentsalztem Wasser unter geringer Scherung zur gewünschten Emulsion verdünnt. Als Konservierer werden 0,36g ACTICIDE® MV (Thor Chemie GmbH Speyer) zugegeben. Es resultiert eine milchig-weiße Dispersion mit einer durchschnittlichen Partikelgröße D(50) von 0,270 μm und einem pH-Wert von 6,0.

Beispiel **V7:** (nicht erfindungsgemäß)

200g β-Ketocarbonyl-funktioneller Organosiliciumverbindung **A1** werden bei 60°C aufgeschmolzen. 6,68g einer 90%igen wässrigen Lösung an Isotridecyldecaethoxylat, käuflich erwerblich unter dem Handelsnamen MARLIPAL® O13/109 (SASOL GmbH Marl), 12,6 g einer 30%igen wässrigen Lösung von Cetyltrimethylammoniumchlorid, käuflich erwerblich unter dem Handelsnamen GENAMIN® CTAC (Clariant SE Sulzbach am Taunus) werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine cremige Mischung als Voremulsion. Diese wird langsam mit 179,96 g vollentsalztem Wasser unter geringer Scherung zur gewünschten Emulsion verdünnt. Als Konservierer werden 0,36g ACTICIDE® MV (Thor Chemie GmbH Speyer) zugegeben.

Die inhomogene Mischung ist nicht mit Wasser verdünnbar also unbrauchbar.

Beispiel **V8:** (nicht erfindungsgemäß)

200g β-Ketocarbonyl-funktioneller Organosiliciumverbindung **A1** werden bei 60°C aufgeschmolzen. 18,0 g einer 66%igen wässrigen Lösung an Diisodecylsulfosuccinat-Natriumsalz, käuflich erwerblich unter dem Handelsnamen Disponil SUS IC 10 (BASF SE Ludwigshafen) werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12

m/s entspricht) homogenisiert. Es entsteht eine cremige Mischung als Voremulsion. Diese wird langsam mit 181,64 g vollentsalztem Wasser unter geringer Scherung zur gewünschten Emulsion verdünnt. Als Konservierer werden 0,36g ACTICIDE® MV (Thor Chemie GmbH Speyer) zugegeben. Die entstandene milchige Emulsion trennt sich bereits nach wenigen Stunden.

Beispiel **V9:** (nicht erfindungsgemäß)

250g β-Ketocarbonyl-funktioneller Organosiliciumverbindung **A4** werden bei 60°C aufgeschmolzen. 15,0 g N-Lauroylsarcosin-Natriumsalz, käuflich erwerblich bei Merck KGaA Darmstadt und 10g Wasser werden mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine cremige Mischung als Voremulsion. Diese wird langsam mit 205,95 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,664 μm und einem pH-Wert von 7,5.

Beispiel **V10:** (nicht erfindungsgemäß)

250g β-Ketocarbonyl-funktioneller Organosiliciumverbindung **A4** werden bei 60°C aufgeschmolzen. 10,0 g Sorbitanstearat (erhältlich unter dem Namen Span 60 bei Croda GmbH Nettetal), 5g Polysorbat 60 (erhältlich unter dem Namen Tween 60 bei Croda GmbH Nettetal) und 10g Wasser werden mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine cremige Mischung als Voremulsion. Diese wird langsam mit 225 g vollentsalztem Wasser verdünnt. Dabei entsteht eine inhomogene Mischung, die nicht mehr in Wasser dispergierbar ist.

Beispiel **E1**: (erfindungsgemäß)

250g β-Ketocarbonyl-funktioneller Organosiliciumverbindung **A1** werden bei 60°C aufgeschmolzen. 15,0 g Ölsäure (Bernd Kraft GmbH Duisburg), 7,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine feste krümelige steife Phase mit einer Fließgrenze von 3240 Pa als Voremulsion. Diese wird langsam mit 216,55 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,506 μm und einem pH-Wert von 8,0.

Beispiel **E2:** (erfindungsgemäß)

250g β-Ketocarbonyl-funktioneller Organosiliciumverbindung **A5** werden bei 60°C aufgeschmolzen. 15,0 g Laurinsäure (Acros Organics, Geel BE), 7,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine krümelige Phase mit einer Fließgrenze von 3540 Pa als Voremulsion. Diese wird langsam mit 216,55 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,226 μm und einem pH-Wert von 7,5.

Beispiel **E3:** (erfindungsgemäß)

250g β-Ketocarbonyl-funktioneller Organosiliciumverbindung **A3** werden bei 60°C aufgeschmolzen. 25,0 g Linolsäure (Sigma Aldrich Chemie GmbH, Steinheim), 12,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine sehr feste krümelige Phase mit einer Fließgrenze von 5820 Pa als Voremulsion. Diese wird langsam mit 415,85 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,420 μm und einem pH-Wert von 8,0.

Beispiel **E4:** (erfindungsgemäß)

250g β-Ketocarbonyl-funktioneller Organosiliciumverbindung **A3** werden bei 60°C aufgeschmolzen. 25,0 g Docosansäure (Acros Organics, Geel BE), 12,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine feste Phase mit einer Fließgrenze von 4300 Pa als Voremulsion. Diese wird langsam mit 415,85 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,760 μm und einem pH-Wert von 8,0.

Beispiel **E5:** (erfindungsgemäß)

175g β-Ketocarbonyl-funktioneller Organosiliciumverbindung **A4** werden bei 60°C aufgeschmolzen. 25,0 g Ölsäure (Bernd Kraft GmbH Duisburg), 12,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine cremige Phase mit einer Fließgrenze von 610 Pa als Voremulsion. Diese wird langsam mit 276,85 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,455 μm und einem pH-Wert von 8,5.

Beispiel **E6:** (erfindungsgemäß)

250g β-Ketocarbonyl-funktioneller Organosiliciumverbindung **A4** werden bei 60°C aufgeschmolzen. 15,0 g Palmitinsäure (Sigma-Aldrich GmbH), 7,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine feste zähe Phase mit einer Fließgrenze von 5210 Pa als Voremulsion. Diese wird langsam mit 216,55 g vollentsalztem Wasser unter geringer Scherung zur gewünschten Emulsion verdünnt. Als Konservierer werden 0,45g ACTICIDE® MV (Thor Chemie GmbH Speyer) zugegeben.

Es resultiert eine milchig-weiße Dispersion mit einer durchschnittlichen Partikelgröße D(50) von 0,754 μm und einem pH-Wert von 8,5.

Beispiel **E7:** (erfindungsgemäß)

250g β-Ketocarbonyl-funktioneller Organosiliciumverbindung **A4** werden bei 60°C aufgeschmolzen. 25,0 g Stearinsinsäure (Fisher Scientific, Loughborough UK), 12,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine dicke cremige Phase mit einer Fließgrenze von 1400 Pa als Voremulsion. Diese wird langsam mit 201,55 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,650 μm und einem pH-Wert von 8,5.

Beispiel **E8:** (erfindungsgemäß)

250g β-Ketocarbonyl-funktioneller Organosiliciumverbindung **A4** werden bei 60°C aufgeschmolzen. 25,0 g Palmitinsäure (Fisher Scientific, Loughborough UK), 12,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine dicke krümelige Phase mit einer Fließgrenze von 6820 Pa als Voremulsion. Diese wird langsam mit 201,55 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,478 μm und einem pH-Wert von 8,5.

Beispiel **E9:** (erfindungsgemäß)

175g β-Ketocarbonyl-funktioneller Organosiliciumverbindung **A3** werden bei 60°C aufgeschmolzen. 25,0 g Ölsäure (Bernd Kraft GmbH Duisburg), 7,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine dicke krümelige Phase mit einer Fließgrenze von 4500 Pa als Voremulsion. Diese wird langsam mit 280 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,859 μm und einem pH-Wert von 8,0.

Beispiel **E10:** (erfindungsgemäß)

175g β-Ketocarbonyl-funktioneller Organosiliciumverbindung **A3** werden bei 60°C aufgeschmolzen. 25,0 g Ölsäure (Bernd Kraft GmbH Duisburg), 15 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine dicke krümelige Phase mit einer Fließgrenze von 5380 Pa als Voremulsion. Diese wird langsam mit 274,55 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,416 μm und einem pH-Wert von 8,5.

Beispiel **E11**: (erfindungsgemäß)

250g β-Ketocarbonyl-funktioneller Organosiliciumverbindung **A4** werden bei 60°C aufgeschmolzen. 12,5 g Ölsäure (Bernd Kraft GmbH Duisburg), 12,5 g Linolsäure (Sigma Aldrich Chemie GmbH, Steinheim), 12,5 g Triethanolamin und 10,0 g vollentsalztes Wasser werden zugegeben und die Mischung mit einem ULTRA-TURRAX® T50 (Fa. Janke & Kunkel/IKA) 4 Minuten bei einer Drehzahl von 6000/min (was einer Umfangsgeschwindigkeit von ca. 12 m/s entspricht) homogenisiert. Es entsteht eine dicke krümelige Phase mit einer Fließgrenze von 2040 Pa als Voremulsion. Diese wird langsam mit 260 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,629 μm und einem pH-Wert von 7,5.

Beispiel **E12:** (erfindungsgemäß)

250g β-Ketocarbonyl-funktioneller Organosiliciumverbindung **A4** werden bei 60°C aufgeschmolzen. 15,0 g Laurinsäure (Acros Organics, Geel BE), 7,5 g Triethanolamin und 10,0 g vollentsalztes Wasser werden zugegeben und die Mischung mit einem ULTRA-TURRAX® T50 (Fa. Janke & Kunkel/IKA) 3 Minuten bei einer Drehzahl von 6000/min (was einer Umfangsgeschwindigkeit von ca. 12 m/s entspricht) homogenisiert. Es entsteht eine krümelige Phase mit einer Fließgrenze von 6330 Pa als Voremulsion. Diese wird langsam mit 216,55 g vollentsalztem Wasser unter geringer Scherung zur gewünschten Emulsion verdünnt. Als Konservierer werden 0,45g ACTICIDE® MV (Thor Chemie GmbH Speyer) zugegeben. Es resultiert eine milchig-weiße Dispersion mit einer durchschnittlichen Partikelgröße D(50) von 0,288 μm und einem pH-Wert von 7,5.

Die Emulsionseigenschaften sind in Tabelle 1 zusammengefasst.

Tabelle 1: Emulsionseigenschaften

| Beispiel | D(50) in μm | pH | Instabilitätsindex nach 8h /4000/min | Stabilität 28d 50°C |
|---|---|---|---|---|
| V1 | 0,441 | 6,5 | 0,137 | i.O.* |
| V2 | 0,481 | 6,5 | 0,167 | i.O. |
| V3 | 0,766 | 10,0 | 0,314 | 30% Serum** |
| V4 | Inhomogen nicht verdünnbar | | | |
| V5 | Inhomogen nicht verdünnbar | | | |
| V6 | 0,270 | 6,0 | 0,102 | i.O. |
| V7 | Inhomogen nicht verdünnbar | | | |

(fortgesetzt)

| Beispiel | D(50) in μm | pH | Instabilitätsindex nach 8h /4000/min | Stabilität 28d 50°C |
|---|---|---|---|---|
| V8 | Inhomogen nicht verdünnbar | | | |
| V9 | 0,664 | 7,5 | 0,143 | 15% Serum |
| V10 | Inhomogen nicht verdünnbar | | | |
| E1 | 0,506 | 8,0 | 0,046 | i.O. |
| E2 | 0,226 | 7,5 | 0,018 | i.O. |
| E3 | 0,420 | 8,0 | 0,087 | i.O. |
| E4 | 0,760 | 8,0 | 0,186 | i.O. |
| E5 | 0,455 | 8,5 | 0,021 | i.O. |
| E6 | 0,754 | 8,5 | 0,240 | i.O. |
| E7 | 0,650 | 8,5 | 0,013 | i.O. |
| E8 | 0,478 | 8,5 | 0,009 | i.O. |
| E9 | 0,859 | 8,0 | 0,064 | i.O. |
| E10 | 0,416 | 8,5 | 0,008 | i.O. |
| E11 | 0,629 | 7,5 | 0,017 | i.O. |
| E12 | 0,288 | 7,5 | 0,028 | i.O. |
| *i.O. = in Ordnung<br>**Serum bedeutet eine sichtbare Abscheidung von dünnerer Emulsion oder Wasser am Boden des Gefäßes. | | | | |

Die erfindungsgemäßen Emulsionen sind stabil und weisen überwiegend deutliche bessere Stabilitäten auf als die Vergleichsversuche. Die Vergleichsversuche zeigen außerdem, dass man die β-Ketocarbonyl-funktionellen Organosiliciumverbindungen nicht mit allen beliebigen Emulgatoren, z.B. beliebigen ethoxylierten Alkoholen, wie sie bisher allgemein z.B. in US 2009/0144912 A1 und US 2016/0121239 A1 genannt wurden, emulgieren kann.

Anwendungsbeispiele: Die Formulierungen der Anwendungsbeispiele VA1 bis VA3 sowie VA6 und VA9 (nicht erfindungsgemäß) und EA1 bis EA12 (erfindungsgemäß) sind in Tabelle 2 zusammengestellt. Die Emulsionen, die inhomogen und nicht mit Wasser verdünnbar waren konnten nicht geprüft werden.

Tabelle 2: Formulierungen der Flotten zur Ausrüstung der Gewebe

| Beispiel | Emulsion | CT 45 E | Zr-Acetat |
|---|---|---|---|
| VA1 | 40g/l V1 | - | 5g/l |
| VA2 | 40g/l V2 | - | 5g/l |
| VA3 | 40g/l V3 | - | 5g/l |
| VA6-1 | 40g/l V6 | - | 5g/l |
| VA6-2 | 24,5g/l V6 | 15,5g/l | 5g/l |
| VA9 | 40g/l V9 | - | 5g/l |
| EA1 | 40g/l E1 | - | 5g/l |
| EA2 | 40g/l E2 | - | 5g/l |
| EA3 | 40g/l E3 | - | 5g/l |
| EA4 | 40g/l E4 | - | 5g/l |
| EA5 | 40g/l E5 | - | 5g/l |
| EA6-1 | 40g/l E6 | - | 5g/l |
| EA6-2 | 24,5g/l E6 | 15,5g/l | 5g/l |

(fortgesetzt)

| Beispiel | Emulsion | CT 45 E | Zr-Acetat |
|---|---|---|---|
| EA7-1 | 40g/l E7 | - | 5g/l |
| EA7-2 | 24,5g/l E7 | 15,5g/l | 5g/l |
| EA8-1 | 40g/l E8 | - | 5g/l |
| EA8-2 | 24,5g/l E8 | 15,5g/l | 5g/l |
| EA9 | 40g/l E9 | - | 5g/l |
| EA10 | 40g/l E10 | - | 5g/l |
| EA11 | 40g/l E11 | - | 5g/l |
| EA12 | 40g/l E12 | - | 5g/l |

Anwendungsbeispiele: Die Prüfergebnisse der Anwendungsbeispiele VA1 bis VA3 sowie VA6 und VA9 (nicht erfindungsgemäß) und EA1 bis EA12 (erfindungsgemäß) sind in Tabelle 3 zusammengestellt.

Tabelle 3: Prüfergebnisse der ausgerüsteten Gewebe

| Beispiel | Spraytest | Spraytest nach Waschen | Bundesmanntest | | |
|---|---|---|---|---|---|
| | | | Bewertung | Rückseite benetzt | Wasseraufnahme |
| VA1 | 100 | 50 | 2 | ja | 14,0% |
| VA2 | 100 | 50 | 2 | ja | 10,0% |
| VA3 | Keine Ausrüstung möglich, inhomogene Flotte | | | | |
| VA6-1 | 100 | 60 | 1 | ja | 14,6% |
| VA6-2 | 100 | 50 | 1 | ja | 18,5% |
| VA9 | 100 | 50 | 1 | ja | 11,0% |
| EA1 | 100 | 80 | 4 | nein | 7,2% |
| EA2 | 100 | 70 | 4 | nein | 8,0% |
| EA3 | 100 | 80 | 4 | nein | 6,2% |
| EA4 | 100 | 80 | 4 | nein | 5,9% |
| EA5 | 100 | 70 | 4 | nein | 7,6% |
| EA6-1 | 100 | 70 | 4 | nein | 6,4% |
| EA6-2 | 100 | 60 | 2 | ja | 10,7% |
| EA7-1 | 100 | 70 | 4 | nein | 6,4% |
| EA7-2 | 100 | 60 | 3 | ja | 10,0% |
| EA8-1 | 100 | 80 | 4 | nein | 6,0% |
| EA8-2 | 100 | 60 | 2 | ja | 10,3% |
| EA9 | 100 | 70 | 3 | nein | 7,9% |
| EA10 | 100 | 70 | 4 | nein | 7,2% |
| EA11 | 100 | 80 | 4 | nein | 6,7% |
| EA12 | 100 | 80 | 4 | nein | 6,6% |

Die erfindungsgemäßen Emulsionen EA1 bis EA12 zeigen im Vergleich zu den nicht erfindungsgemäßen Emulsionen VA1, VA2 und VA6, wobei die nicht erfindungsgemäße Emulsion VA3 überhaupt nicht stabil und verdünnbar war, überraschenderweise eine deutlich bessere Hydrophobierwirkung, insbesondere bei dem strengeren Bundesmanntest aber auch bei der Waschfestigkeit.

Sämtliche ausgerüsteten Textilien zeigten einen angenehmen Weichgriff.

## Patentansprüche

1. Wässrige Emulsionen enthaltend

   (A) β-Ketocarbonyl-funktionelle Organosiliciumverbindungen, die mindestens einen Si-gebundenen Rest **A** der allgemeinen Formel

   $$(Si)\text{-}L^1\text{-}[X^1\text{-}L^2\text{-}]_yX^2 \qquad (I)$$

   enthalten, wobei

   $L^1$ gleich oder verschieden ist und einen zweiwertigen, Si-C-gebundenen Kohlenwasserstoffrest mit 1 bis 18 C-Atomen bedeutet,
   $L^2$ gleich oder unterschiedlich ist und einen zweiwertigen Kohlenwasserstoffrest mit 1 bis 6 C-Atomen bedeutet,
   $X^1$ ein Rest der Formel -O-, -NZ-, $-NR^2-$ oder -S-bedeutet,
   $X^2$ ein Rest der Formel -O-Z, -NH-Z, $-NR^2-Z$, -S-Z bedeutet,
   Z ein Rest der Formel $-C(=O)-CHR^3-C(=O)-CH_2R^3$ ist,
   $R^2$ einen einwertigen Kohlenwasserstoffrest mit 1 bis 18 C-Atomen bedeutet,
   $R^3$ einen einwertigen, gegebenenfalls substituierten Kohlenwasserstoffrest mit mindestens 12 C-Atomen, vorzugsweise mit mindestens 14 C-Atome bedeutet,
   y 0, 1, 2 oder 3, vorzugsweise 0 oder 1, besonders bevorzugt 0 ist und
   (Si)- die Bindung zu einem Si-Atom bedeutet,

   (B) mindestens ein Salz einer gesättigten oder ungesättigten Fettsäure mit mindestens 10 Kohlenstoffatomen und
   (C) Wasser,

   mit der Maßgabe, dass die Mitverwendung von nichtionogenen Emulgatoren mit einem HLB-Wert von kleiner als 15 ausgeschlossen ist.

2. Wässrige Emulsionen nach Anspruch 1, **dadurch gekennzeichnet, dass** $X^1$ einen Rest -NZ- und $X^2$ einen Rest -NH-Z bedeutet, wobei Z die in Anspruch 1 dafür angegebene Bedeutung hat.

3. Wässrige Emulsionen nach Anspruch 1 oder 2, **dadurch gekennzeichnet, dass** die Mitverwendung von weiteren Emulgatoren (D), die verschieden von den Emulgatoren (B) sind, ausgeschlossen ist.

4. Wässrige Emulsionen nach Anspruch 1, 2 oder 3, **dadurch gekennzeichnet, dass**
   (E) nichtwässrige Lösungsmittel oder Co-Emulgatoren enthalten sind.

5. Wässrige Emulsionen nach einem der Ansprüche 1 bis 4, **dadurch gekennzeichnet, dass**
   (F) Hilfsstoffe, vorzugsweise ausgewählt aus der Gruppe der pH-Regulierungsmittel, Schauminhibitoren, Verdicker, Schutzkolloide, Konservierungsmittel, Desinfektionsmittel, Netzmittel, Korrosionsinhibitoren, Farbstoffe, Duftstoffe, von (A) verschiedenen Siloxane, und deren Mischungen,
   enthalten sind.

6. Wässrige Emulsionen nach einem der Ansprüche 1 bis 5, **dadurch gekennzeichnet, dass** als β-Ketocarbonyl-funktionelle Organosiliciumverbindungen (A) Organopolysiloxane der allgemeinen Formel

   $$A_dR^4_{3-d}SiO(SiR_2O)_e(SiR^4AO)_fSiR^4_{3-d}A_d \qquad (III),$$

   eingesetzt werden, wobei

   A ein Rest der Formel (I) gemäß Anspruch 1 ist,

R einen einwertigen, gegebenenfalls substituierten Kohlenwasserstoffrest mit 1 bis 18 C-Atomen je Rest bedeutet,
$R^1$ ein Wasserstoffatom oder einen Alkylrest mit 1 bis 8 C-Atomen bedeutet,
$R^4$ gleich oder verschieden ist und einen Rest R oder $-OR^1$ bedeutet,
d 0 oder 1,
e 0 oder eine ganze Zahl von 1 bis 2000 und
f 0 oder eine ganze Zahl von 1 bis 20 ist,

mit der Maßgabe, dass durchschnittlich mindestens ein Rest
A je Molekül enthalten ist und dass
f ungleich 0 ist, wenn d gleich 0 ist bzw.
d gleich 1 ist, wenn f gleich 0 ist.

**7.** Verfahren zur Herstellung der wässrigen Emulsionen nach einem der Ansprüche 1 bis 6 durch Vermischen von

(A) β-Ketocarbonyl-funktionelle Organosiliciumverbindungen nach Anspruch 1, 2 oder 6 mit
(B) mindestens einem Salz einer gesättigten oder ungesättigten Fettsäure mit mindestens 10 Kohlenstoffatomen
(C) Wasser,
gegebenenfalls
(D) weiteren Emulgatoren
gegebenenfalls
(E) nichtwässrige Lösungsmittel oder Co-Emulgatoren und gegebenenfalls
(F) Hilfsstoffe nach Anspruch 6,

mit der Maßgabe, dass die Mitverwendung von nichtionogenen Emulgatoren mit einem HLB-Wert von kleiner als 15 ausgeschlossen ist.

**8.** Verfahren zur Ausrüstung von faserigen Substraten, vorzugsweise Textilien, mit Zusammensetzungen enthaltend wässrige Emulsionen nach einem der Ansprüche 1 bis 6 oder hergestellt nach Anspruch 7.

**9.** Zusammensetzungen enthaltend
wässrige Emulsionen nach einem der Ansprüche 1 bis 6 oder hergestellt nach Anspruch 7,
aminofunktionelle Organosiliciumverbindungen (G) oder deren wässrige Emulsionen (G') und
gegebenenfalls Organometallverbindungen (H).

**10.** Zusammensetzungen nach Anspruch 9, **dadurch gekennzeichnet, dass** als aminofunktionelle Organosiliciumverbindungen (G) Organopolysiloxane der allgemeinen Formel

$$Q_uR^4_{(3-u)}SiO(SiR_2O)_v(SiR^4QO)_wSiR^4_{(3-u)}Qu \qquad (X)$$

eingesetzt werden, wobei
Q einen Rest der Formel

$$(Si)\text{-}L^1\text{-}[X^5\text{-}L^2\text{-}]_zX^6 \qquad (VIII)$$

bedeutet,

R einen einwertigen, gegebenenfalls substituierten Kohlenwasserstoffrest mit 1 bis 18 C-Atomen je Rest bedeutet,
$R^2$ einen einwertigen Kohlenwasserstoffrest mit 1 bis 18 C-Atomen bedeutet,
$R^4$ gleich oder verschieden ist und einen Rest R oder $OR^1$ bedeutet,
$L^1$ gleich oder verschieden ist und einen zweiwertigen, Si-C-gebundenen Kohlenwasserstoffrest mit 1 bis 18 C-Atomen bedeutet,
$L^2$ gleich oder unterschiedlich ist und einen zweiwertigen Kohlenwasserstoffrest mit 1 bis 6 C-Atomen bedeutet,
$X^5$ ein Rest der Formel -NH- oder $-NR^2-$, vorzugsweise -NH-bedeutet,
$X^6$ ein Rest der Formel $-NH_2$ oder $-NR^2H$, vorzugsweise $-NH_2$ bedeutet, und
(Si)- die Bindung zum Si-Atom bedeutet,
u 0 oder 1,

v 0 oder eine ganze Zahl von 1 bis 2000 und
w 0 oder eine ganze Zahl von 1 bis 20 ist,
z 0, 1, 2 oder 3, vorzugsweise 0 oder 1, besonders bevorzugt 1, ist,

mit der Maßgabe, dass durchschnittlich mindestens ein Rest Q je Molekül enthalten ist, was bedeutet, dass w ungleich 0 ist, wenn u gleich 0 ist bzw. u gleich 1 ist, wenn w gleich 0 ist.

**11.** Zusammensetzungen nach Anspruch 9 oder 10, **dadurch gekennzeichnet, dass** als Organometallverbindungen (H) Amine, Alkoholate, carbonsaure Salze, phosphorsaure Salze oder Chelate von Metallen ausgewählt aus der Gruppe von Pb, Zn, Zr, Sb, Fe, Cd, Sn, Ti, Ba, Ca, Mn, V, Al und Co, vorzugsweise Alkoholate oder carbonsaure Salze von Titan oder Zirkon, bevorzugt Butyltitanat, Zirkonoctoat oder Zirkonacetat, eingesetzt werden.

**12.** Verfahren zur Ausrüstung von faserigen Substraten, vorzugsweise Textilien, mit Zusammensetzungen nach Anspruch 9, 10 oder 11.

**13.** Verfahren nach Anspruch 12, **dadurch gekennzeichnet, dass** die Zusammensetzungen nach Anspruch 9, 10 oder 11 auf die faserigen Substrate, vorzugsweise Textilien, aufgetragen und anschließend die behandelten faserigen Substrate, vorzugsweise die behandelten Textilien, trocknen gelassen werden.

## Claims

**1.** Aqueous emulsions comprising

(A) β-ketocarbonyl-functional organosilicon compounds which comprise at least one Si-bonded radical **A** of the general formula

$$(Si)\text{-}L^1\text{-}[X^1\text{-}L^2\text{-}]yX^2 \qquad (I)$$

where

$L^1$ is identical or different and is a divalent, Si-C-bonded hydrocarbon radical having 1 to 18 carbon atoms,
$L^2$ is identical or different and is a divalent hydrocarbon radical having 1 to 6 carbon atoms,
$X^1$ is a radical of the formula -O-, -NZ-, -$NR^2$- or -S-,
$X^2$ is a radical of the formula -O-Z, -NH-Z, -$NR^2$-Z, -S-Z,
Z is a radical of the formula $-C(=O)-CHR^3-C(=O)-CH_2R^3$,
$R^2$ is a monovalent hydrocarbon radical having 1 to 18 carbon atoms,
$R^3$ is a monovalent, optionally substituted hydrocarbon radical having at least 12 carbon atoms, preferably having at least 14 carbon atoms,
y is 0, 1, 2 or 3, preferably 0 or 1, more preferably 0, and
(Si)- denotes the bond to an Si atom,

(B) at least one salt of a saturated or unsaturated fatty acid having at least 10 carbon atoms, and
(C) water,

with the proviso that the accompanying use of nonionic emulsifiers having an HLB of less than 15 is ruled out.

**2.** Aqueous emulsions according to Claim 1, **characterized in that** $X^1$ is a radical -NZ- and $X^2$ is a radical -NH-Z, where Z has the definition stated for it in Claim 1.

**3.** Aqueous emulsions according to Claim 1 or 2, **characterized in that** the accompanying use of further emulsifiers (D), which are different from the emulsifiers (B), is ruled out.

**4.** Aqueous emulsions according to Claim 1, 2 or 3, **characterized in that** it comprises
(E) nonaqueous solvents or coemulsifiers.

**5.** Aqueous emulsions according to any of Claims 1 to 4, **characterized in that** it comprises
(F) auxiliaries preferably selected from the group of pH regulators, foam inhibitors, thickeners, protective colloids, preservatives, disinfectants, wetting agents, corrosion inhibitors, dyes, fragrances, non-(A) siloxanes, and mixtures thereof.

**6.** Aqueous emulsions according to any of Claims 1 to 5, **characterized in that** β-ketocarbonyl-functional organosilicon compounds (A) used comprise organopolysiloxanes of the general formula

$$A_dR^4_{(3-d)}SiO(SiR_2O)_e(SiR^4AO)_fSiR^4_{(3-d)}A_d \quad \text{(III)},$$

where

A is a radical of the formula (I) as in Claim 1,
R is a monovalent, optionally substituted hydrocarbon radical having 1 to 18 carbon atoms per radical,
$R^1$ is a hydrogen atom or an alkyl radical having 1 to 8 carbon atoms,
$R^4$ is identical or different and is a radical R or $-OR^1$, d is 0 or 1,
e is 0 or an integer from 1 to 2000, and
f is 0 or an integer from 1 to 20,
with the proviso that there is on average at least one radical A per molecule and that, respectively,
if d is 0, f is not 0, and
if f is 0, d is 1.

**7.** Method for producing aqueous emulsions according to any of Claims 1 to 6 by mixing

(A) β-ketocarbonyl-functional organosilicon compounds of Claim 1, 2 or 6 with
(B) at least one salt of a saturated or unsaturated fatty acid having at least 10 carbon atoms,
(C) water,
optionally
(D) further emulsifiers
optionally
(E) nonaqueous solvents or coemulsifiers, and optionally
(F) auxiliaries as in Claim 6,

with the proviso that the accompanying use of nonionic emulsifiers having an HLB of less than 15 is ruled out.

**8.** Method of finishing fibrous substrates, preferably textiles, with compositions comprising aqueous emulsions of any of Claims 1 to 6 or produced as in Claim 7.

**9.** Compositions comprising
aqueous emulsions of any of Claims 1 to 6 or produced as in Claim 7,
amino-functional organosilicon compounds (G) or aqueous emulsions (G') thereof, and
optionally organometallic compounds (H).

**10.** Compositions according to Claim 9, **characterized in that** amino-functional organosilicon compounds (G) used comprise
organopolysiloxanes of the general formula

$$Q_uR^4_{(3-u)}SiO(SiR_2O)_v(SiR^4QO)_wSiR^4_{(3-u)}Q_u \quad \text{(X)}$$

where
Q is a radical of the formula

$$(Si)\ -L^1-[X^5-L^2-]_zX^6 \quad \text{(VIII)},$$

R is a monovalent, optionally substituted hydrocarbon radical having 1 to 18 carbon atoms per radical,
$R^2$ is a monovalent hydrocarbon radical having 1 to 18 carbon atoms,
$R^4$ is identical or different and is a radical R or $OR^1$, $L^1$ is identical or different and is a divalent, Si-C-bonded hydrocarbon radical having 1 to 18 carbon atoms, $L^2$ is identical or different and is a divalent hydrocarbon radical

having 1 to 6 carbon atoms,
$X^5$ is a radical of the formula -NH- or $-NR^2-$, preferably -NH-,
$X^6$ is a radical of the formula $-NH_2$ or $-NR^2H$, preferably $-NH_2$, and
(Si)- denotes the bond to the Si atom,
u is 0 or 1,
v is 0 or an integer from 1 to 2000, and
w is 0 or an integer from 1 to 20,
z is 0, 1, 2 or 3, preferably 0 or 1, more preferably 1,
with the proviso that there is on average at least one radical Q per molecule, meaning that, respectively,
if u is 0, w is not 0, and
if w is 0, u is 1.

**11.** Compositions according to Claim 9 or 10, **characterized in that** organometallic compounds (H) used comprise amines, alkoxides, carboxylic acid salts, phosphoric acid salts or chelates of metals selected from the group of Pb, Zn, Zr, Sb, Fe, Cd, Sn, Ti, Ba, Ca, Mn, V, Al, and Co, preferably alkoxides or carboxylic acid salts of titanium or zirconium, more preferably butyl titanate, zirconium octoate or zirconium acetate.

**12.** Method for finishing fibrous substrates, preferably textiles, with compositions according to Claim 9, 10 or 11.

**13.** Method according to Claim 12, **characterized in that** the compositions according to Claim 9, 10 or 11 are applied to the fibrous substrates, preferably textiles, and subsequently the treated fibrous substrates, preferably the treated textiles, are allowed to dry.

## Revendications

**1.** Émulsions aqueuses contenant

(A) des composés organosiliciés à fonctionnalité β-cétocarbonyle, qui contiennent au moins un radical A lié par Si de la formule générale

$$(Si)\ -L^1-[X^1-L^2-]_yX^2 \qquad (I)$$

dans laquelle

$L^1$ est identique ou différent et signifie un radical hydrocarboné divalent lié par Si-C, comprenant 1 à 18 atomes de carbone,
$L^2$ est identique ou différent et signifie un radical hydrocarboné divalent, comprenant 1 à 6 atomes de carbone,
$X^1$ signifie un radical de formule -O-, -NZ-, $-NR^2-$ou -S-,
$X^2$ signifie un radical de formule -O-Z, -NH-Z, $-NR^2-Z$, -S-Z,
Z représente un radical de formule $-C(=O)-CHR^3-C\ (=O)\ -CH_2R^3$,
$R^2$ signifie un radical hydrocarboné monovalent comprenant 1 à 18 atomes de carbone,
$R^3$ signifie un radical hydrocarboné monovalent le cas échéant substitué, comprenant au moins 12 atomes de carbone, de préférence au moins 14 atomes de carbone.
y vaut 0, 1, 2 ou 3, de préférence 0 ou 1, de manière particulièrement préférée 0,

et (Si)- signifie la liaison à un atome de Si,
(B) au moins un sel d'un acide gras saturé ou insaturé comprenant au moins 10 atomes de carbone et
(C) de l'eau,

à condition que l'utilisation conjointe d'émulsifiants non ionogènes présentant une valeur BLH inférieure à 15 soit exclue.

**2.** Émulsions aqueuses selon la revendication 1, **caractérisées en ce que** $X^1$ signifie un radical -NZ- et $X^2$ signifie un radical -NH-Z, Z présentant la signification indiquée pour celui-ci dans la revendication 1.

**3.** Émulsions aqueuses selon la revendication 1 ou 2, **caractérisées en ce que** l'utilisation conjointe d'autres émulsifiants (D) qui sont différents des émulsifiants (B) est exclue.

**4.** Émulsions aqueuses selon la revendication 1, 2 ou 3, **caractérisées en ce que** (E) des solvants ou des co-émulsifiants non aqueux sont contenus.

**5.** Émulsions aqueuses l'une quelconque des revendications 1 à 4, **caractérisées en ce que** (F) des adjuvants, de préférence choisis dans le groupe formé par les agents de régulation du pH, les inhibiteurs de mousse, les épaississants, les colloïdes de protection, les conservateurs, les désinfectants, les agents mouillants, les inhibiteurs de corrosion, les colorants, les parfums, les siloxanes différents de (A) et leurs mélanges sont contenus.

**6.** Émulsions aqueuses l'une quelconque des revendications 1 à 5, **caractérisées en ce qu'**on utilise, en tant que composés organosiliciés à fonctionnalité β-cétocarbonyle (A), des organopolysiloxanes de formule générale

$$A_dR^4_{3-d}SiO(SiR_2O)_e(SiR^4AO)_fSiR^4_{3-d}A_d \qquad (III),$$

dans laquelle

A représente un radical de formule (I) selon la revendication 1,
R signifie un radical hydrocarboné monovalent, le cas échéant substitué, comprenant 1 à 18 atomes de carbone par radical,
$R^1$ signifie un atome d'hydrogène ou un radical alkyle comprenant 1 à 8 atomes de carbone,
$R^4$ est identique ou différent et représente un radical R ou $-OR^1$,
d vaut 0 ou 1,
e vaut 0 ou un nombre entier de 1 à 2000 et
f vaut 0 ou un nombre entier de 1 à 20,

à condition qu'en moyenne au moins un radical A soit contenu par molécule et que f soit différent de 0 lorsque d vaut 0 ou, selon le cas, que d vaille 1 lorsque f vaut 0.

**7.** Procédé pour la préparation des émulsions aqueuses selon l'une quelconque des revendications 1 à 6 par mélange de

(A) composés organosiliciés à fonctionnalité β-cétocarbonyle selon la revendication 1, 2 ou 6 avec
(B) au moins un sel d'un acide gras saturé ou insaturé comprenant au moins 10 atomes de carbone
(C) de l'eau, le cas échéant
(D) d'autres émulsifiants, le cas échéant
(E) des solvants ou des co-émulsifiants non aqueux et le cas échéant
(F) des adjuvants selon la revendication 6,

à condition que l'utilisation conjointe d'émulsifiants non ionogènes présentant une valeur BLH inférieure à 15 soit exclue.

**8.** Procédé pour l'apprêt de substrats fibreux, de préférence de textiles, par des compositions contenant des émulsions aqueuses selon l'une quelconque des revendications 1 à 6 ou préparées selon la revendication 7.

**9.** Compositions contenant des émulsions aqueuses selon l'une quelconque des revendications 1 à 6 ou préparées selon la revendication 7, des composés organosiliciés à fonctionnalité amino (G) ou leur émulsions aqueuses (G') et le cas échéant des composés organométalliques (H).

**10.** Compositions selon la revendication 9, **caractérisées en ce qu'**on utilise, en tant que composés organosiliciés à fonctionnalité amino (G), des organopolysiloxanes de formule générale

$$QuR^4_{(3-u)}SiO(SiR_2O)_v(SiR^4QO)_wSiR^4_{(3-u)}Q_u \qquad (X)$$

dans laquelle

Q signifie un radical de formule

$$(Si) -L^1-[X^5-L^2-]_zX^6 \qquad (VIII)$$

R signifie un radical hydrocarboné monovalent, le cas échéant substitué, comprenant 1 à 18 atomes de carbone par radical,
$R^2$ signifie un radical hydrocarboné monovalent comprenant 1 à 18 atomes de carbone,
$R^4$ est identique ou différent et représente un radical R ou $OR^1$,
$L^1$ est identique ou différent et signifie un radical hydrocarboné divalent lié par Si-C, comprenant 1 à 18 atomes de carbone,
$L^2$ est identique ou différent et signifie un radical hydrocarboné divalent, comprenant 1 à 6 atomes de carbone,
$X^5$ signifie un radical de formule -NH- ou $-NR^2-$, de préférence -NH-,
$X^6$ signifie un radical de formule $-NH_2$ ou $-NR^2H$, de préférence $-NH_2$ et
(Si)- signifie la liaison à l'atome de Si,
u vaut 0 ou 1,
v vaut 0 ou un nombre entier de 1 à 2000 et
w vaut 0 ou un nombre entier de 1 à 20,
z vaut 0, 1, 2 ou 3, de préférence 0 ou 1, de manière particulièrement préférée 1,

à condition qu'en moyenne au moins un radical Q soit contenu par molécule, ce qui signifie que w est différent de 0 lorsque u vaut 0 ou, selon le cas, que u vaut 1 lorsque w vaut 0.

**11.** Compositions selon la revendication 9 ou 10, **caractérisées en ce que** des amines, des alcoolates, des sels d'acide carboxylique, des sels d'acide phosphorique ou des chélates de métaux, choisis dans le groupe formé par Pb, Zn, Zr, Sb, Fe, Cd, Sn, Ti, Ba, Ca, Mn, V, Al et Co, de préférence des alcoolates ou des sels d'acide carboxylique de titane ou de zirconium, de préférence le titanate de butyle, l'octoate de zirconium ou l'acétate de zirconium, sont utilisés en tant que composés organométalliques (H).

**12.** Procédé pour l'apprêt de substrats fibreux, de préférence de textiles, par des compositions selon la revendication 9, 10 ou 11.

**13.** Procédé selon la revendication 12, **caractérisé en ce que** les compositions selon la revendication 9, 10 ou 11 sont appliquées sur les substrats fibreux, de préférence des textiles et les substrats fibreux traités, de préférence les textiles traités, sont ensuite laissés à sécher.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20080293907 A1
- US 20090144912 A1
- US 20110024679 A1
- US 20160121239 A1
- US 20050215806 A1
- US 20020049296 A1
- US 20150112092 A1


### In der Beschreibung aufgeführte Nicht-Patentliteratur


- Hans-Dieter Dörfler, Grenzflächen- und Kolloidchemie. VCH, 1994, 198
- Ullmann's Encyclopedia of Industrial Chemistry. Wiley-VCH Verlag, 2003
- *IKA Dispergierer Broschüre,* Mai 2013
- Dissolver. Römpp Chemie Lexikon. 2014
- **G. ENGELHARDT ; H. JANCKE.** Über die 1H-, 13C- und 29Si-NMR chemischen Verschiebungen einiger linearer, verzweigter und cyclischer Methyl-Siloxan-Verbindungen. *J. Organometal. Chem.,* 1971, vol. 28, 293-300
- NMR spectroscopy of organosilicon compounds. **ELIZABETH A. WILLIAMS.** The Chemistry of Organic Silicon Compounds. John Wiley and Sons Ltd, 1989, 511-533
- *Dispersion Letters Technical,* 2013, vol. T4, 1-4